# EUROPEAN PATENT SPECIFICATION

(11) **EP 3 295 253 B1**
(45) Date of publication and mention of the grant of the patent: **20.03.2019**
(21) Application number: 15784403.6
(22) Date of filing: 23.10.2015
(51) Int. Cl.: G03G 9/12, G03G 9/13, G03G 8/00, G03G 7/00, B41M 1/26, B41M 7/00

(54) **FLEXIBLE PACKAGING MATERIAL**
FLEXIBLES VERPACKUNGSMATERIAL
MATÉRIAU D'EMBALLAGE SOUPLE

(43) Date of publication of application: 21.03.2018
(73) Proprietor: HP INDIGO B.V., 1187 XR Amstelveen (NL)
(72) Inventor: SALANT, Asaf, 76101 Nes Ziona (IL); AZZAM, Tony, 76101 Nes Ziona (IL); TULCHINSKI, Dani, 76101 Nes Ziona (IL); GLICK, Einat, 76101 Nes Ziona (IL); SLIVNIAK, Raia, 76101 Nes Ziona (IL); TZOMIK, Inna, 76101 Nes Ziona (IL)
(74) Representative: Haseltine Lake LLP
(86) International application number: PCT/EP2015/074642
(87) International publication number: WO 2017/067611

(56) References cited:
- EP-A1- 1 341 048
- EP-A2- 1 285 859
- WO-A1-2009/052973
- WO-A1-2014/187497
- US-A1- 2006 177 636

## Description

### Background

All manner of consumer goods, in particular food products, are packaged using thin films or sheets of flexible packaging material, with images such as corporate branding, or product information printed onto the film. The flexible packaging material serves to protect the product from, for example, moisture, oxidation or pathogens, while also providing information to the user regarding the nature and origin of the product contained therein.

### Brief Description of the Figures

Figure 1 shows a schematic process for producing a flexible packaging material; and
Figure 2 is a graph showing lamination bond strength for flexible packaging materials.

### Detailed Description

Before the present disclosure is disclosed and described, it is to be understood that this disclosure is not restricted to the particular process features and materials disclosed herein because such process features and materials may vary somewhat.

It is noted that, as used in this specification and the appended claims, the singular forms "a," "an," and "the" include plural referents unless the context clearly dictates otherwise.

As used herein, "carrier fluid", "carrier liquid," "carrier," or "carrier vehicle" refers to the fluid in which pigment particles, colorant, charge directors and other additives can be dispersed to form a liquid electrostatic composition or electrophotographic composition. The carrier liquids may include a mixture of a variety of different agents, such as surfactants, co-solvents, viscosity modifiers, and/or other possible ingredients.

As used herein, "electrostatic ink composition" or "liquid electrophotographic composition" generally refers to an ink composition that is generally suitable for use in an electrostatic printing process, sometimes termed an electrophotographic printing process. It may comprise pigment particles, which may comprise a thermoplastic resin.

As used herein, "pigment" generally includes pigment colorants, magnetic particles, aluminas, silicas, and/or other ceramics or organo-metallics, whether or not such particulates impart color. Thus, though the present description primarily exemplifies the use of pigment colorants, the term "pigment" can be used more generally to describe not just pigment colorants, but other pigments such as organometallics, ferrites, ceramics, etc.

As used herein, "co-polymer" refers to a polymer that is polymerized from at least two monomers.

As used herein, "lamination bond strength" refers to the force (per length) required to delaminate a laminated material, and is expressed in units of Newton/inch, or N/in. The lamination bond strength can be measured according to standard techniques, in particular ASTM F0904-98R08. Unless otherwise stated, the lamination bond strength of a flexible packaging material described herein refers to the strength to delaminate the material at the interface between a thermally activatable laminating material and either of the two materials to which the thermally activatable laminating material has bonded.

As used herein, "melt flow rate" generally refers to the extrusion rate of a resin through an orifice of defined dimensions at a specified temperature and load, usually reported as temperature/load, e.g. 190°C/2.16 kg. Flow rates can be used to differentiate grades or provide a measure of degradation of a material as a result of molding. In the present disclosure, "melt flow rate" is measured per ASTM D1238-04c Standard Test Method for Melt Flow Rates of Thermoplastics by Extrusion Plastometer. If a melt flow rate of a particular polymer is specified, unless otherwise stated, it is the melt flow rate for that polymer alone, in the absence of any of the other components of the electrostatic composition.

As used herein, "acidity," "acid number," or "acid value" refers to the mass of potassium hydroxide (KOH) in milligrams that neutralizes one gram of a substance. The acidity of a polymer can be measured according to standard techniques, for example as described in ASTM D1386. If the acidity of a particular polymer is specified, unless otherwise stated, it is the acidity for that polymer alone, in the absence of any of the other components of the liquid toner composition.

As used herein, "melt viscosity" generally refers to the ratio of shear stress to shear rate at a given shear stress or shear rate. Testing is generally performed using a capillary rheometer. A plastic charge is heated in the rheometer barrel and is forced through a die with a plunger. The plunger is pushed either by a constant force or at constant rate depending on the equipment. Measurements are taken once the system has reached steady-state operation. One method used is measuring Brookfield viscosity @ 140°C, units are mPa-s or cPoise. In some examples, the melt viscosity can be measured using a rheometer, e.g. a commercially available AR-2000 Rheometer from Thermal Analysis Instruments, using the geometry of: 25mm steel plate-standard steel parallel plate, and finding the plate over plate rheometry isotherm at 120°C, 0.01 hz shear rate. If the melt viscosity of a particular polymer is specified, unless otherwise stated, it is the melt viscosity for that polymer alone, in the absence of any of the other components of the electrostatic composition.

A certain monomer may be described herein as constituting a certain weight percentage of a polymer. This indicates that the repeating units formed from the said monomer in the polymer constitute said weight percentage of the polymer.

If a standard test is mentioned herein, unless otherwise stated, the version of the test to be referred to is the most recent at the time of filing this patent application.

As used herein, "electrostatic printing" or "electrophotographic printing" generally refers to the process that provides an image that is transferred from a photo imaging substrate either directly or indirectly via an intermediate transfer member to a print substrate. As such, the image is not substantially absorbed into the photo imaging substrate on which it is applied. Additionally, "electrophotographic printers" or "electrostatic printers" generally refer to those printers capable of performing electrophotographic printing or electrostatic printing, as described above. "Liquid electrophotographic printing" is a specific type of electrophotographic printing where a liquid composition is employed in the electrophotographic process rather than a powder toner. An electrostatic printing process may involve subjecting the electrostatic composition to an electric field, e.g. an electric field having a field gradient of 50-400V/µm, or more, in some examples 600-900V/µm, or more.

As used herein, "substituted" may indicate that a hydrogen atom of a compound or moiety us replaced by another atom such as a carbon atom or a _heteroatom, which is part of a group referred to as a substituent. Substituents include, for example, alkyl, alkoxy, aryl, aryloxy, alkenyl, alkenoxy, alkynyl, alkynoxy, thioalkyl, thioalkenyl, thioalkynyl, thioaryl, etc.

As used herein, "heteroatom" may refer to nitrogen, oxygen, halogens, phosphorus, or sulfur.

As used herein, "alkyl" may refer to a branched, unbranched, or cyclic saturated hydrocarbon group, which may, in some examples, contain from 1 to about 50 carbon atoms, or 1 to about 40 carbon atoms, or 1 to about 30 carbon atoms, or 1 to about 10 carbon atoms, or 1 to about 5 carbon atoms for example.

As used herein, "alkyl", or similar expressions such as "alk" in alkoxy, may refer to a branched, unbranched, or cyclic saturated hydrocarbon group, which may, in some examples, contain from 1 to about 50 carbon atoms, or 1 to about 40 carbon atoms, or 1 to about 30 carbon atoms, or 1 to about 10 carbon atoms, or 1 to about 5 carbon atoms for example.

The term "aryl" may refer to a group containing a single aromatic ring or multiple aromatic rings that are fused together, directly linked, or indirectly linked (such that the different aromatic rings are bound to a common group such as a methylene or ethylene moiety). Aryl groups described herein may contain, but are not limited to, from 5 to about 50 carbon atoms, or 5 to about 40 carbon atoms, or 5 to 30 carbon atoms or more, and may be selected from, phenyl and naphthyl.

As used herein, the term "about" is used to provide flexibility to a numerical range endpoint by providing that a given value may be a little above or a little below the endpoint to allow for variation in test methods or apparatus. The degree of flexibility of this term can be dictated by the particular variable as would be understood in the art.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Concentrations, amounts, and other numerical data may be expressed or presented herein in a range format. It is to be understood that such a range format is used merely for convenience and brevity and thus should be interpreted flexibly to include not just the numerical values explicitly recited as the end points of the range, but also to include all the individual numerical values or sub-ranges encompassed within that range as if each numerical value and sub-range is explicitly recited. As an illustration, a numerical range of "about 1 wt% to about 5 wt%" should be interpreted to include not just the explicitly recited values of about 1 wt% to about 5 wt%, but also include individual values and subranges within the indicated range. Thus, included in this numerical range are individual values such as 2, 3.5, and 4 and sub-ranges such as from 1-3, from 2-4, and from 3-5, etc. This same principle applies to ranges reciting a single numerical value. Furthermore, such an interpretation should apply regardless of the breadth of the range or the characteristics being described.
As used herein, wt% values are to be taken as referring to a weight-for-weight (w/w) percentage of solids in the ink composition, and not including the weight of any carrier fluid present.
Unless otherwise stated, any feature described herein can be combined with any aspect or any other feature described herein.
In an aspect there is provided a process for preparing a flexible packaging material. The process may comprise:
providing a first flexible substrate;
printing an ink composition comprising a thermoplastic resin onto the first flexible substrate;
depositing a cross-linking composition comprising a cross-linker onto the printed ink composition disposed on the first flexible substrate such that the thermoplastic resin of the ink composition is crosslinked; and
laminating the first flexible substrate with a second flexible substrate such that the printed ink composition and the cross-linker are disposed between the first and second flexible substrates, wherein the first flexible substrate comprises a primer comprising a primer resin on a surface onto which the ink composition is printed and depositing the cross-linking composition comprising the cross-linker onto the printed ink composition crosslinks the primer resin of the primer.

In another aspect there is provide a flexible packaging material. The flexible packaging material may comprise:
a first flexible substrate;
a printed ink layer comprising a thermoplastic resin disposed on the first flexible substrate;
a cross-linker applied to the printed ink layer such that the thermoplastic resin is crosslinked; and
a second flexible substrate laminated to the first flexible substrate such that the printed ink layer and the cross-linker are disposed between the first and second flexible substrates, wherein the first flexible substrate comprises a primer on a surface on which the printed ink composition is disposed, the cross-linker applied to the printed ink layer such that the primer resin is crosslinked.

In another aspect, there is provided a flexible package. The flexible package comprises the flexible packaging material.

Much research has been carried out in recent years to try to develop laminated flexible packaging materials comprising a functional (barrier) substrate laminated to a second substrate comprising a printed image or information. Some existing laminated flexible packaging materials have been found to be unsuitable for use in particular circumstances, such as storage of particular items (e.g. food, detergent, chemical), package storage conditions (e.g. humid conditions which may be found in particular geographical locations, or in refrigerators or freezers), and high performance flexible packaging in which packages are required to withstand, for example, processes for extending the shelf life or food such as pasteurization and retort. Printed images or information on some existing laminated flexible packaging materials have been found to discolour on heating, for example on heat sealing of a package or lamination bond strength of some existing laminated flexible packages may be found to decrease on heating causing defects between the layers during thermal processes such as pasteurization and retort.

WO 2009/052973 discloses a laminate for use in packaging applications, which comprises a polymeric substrate printed with a polyurethane based ink composition to form a printed image on said substrate, said printed image remaining substantially intact and said laminate having substantially the same lamination bond strength before and after sterilization.

The present inventors have found that examples of the methods and products as described herein avoid or at least mitigate at least one of the difficulties described above. They have found that examples of the method and products are more successful than previous methods in that the materials and packages produced have been found to be suitable in flexible packages which enable a long shelf life for food products as well as heating of food products within the packaging, e.g. microwaving. The inventors have also found that the materials and packages produced do not show the same problems with discolouration or decrease of bond strength on heating found in some existing materials and packaging, allowing very attractive and colourful products to be produced and the colours to be maintained through packaging and storage as well as providing flexible packaging materials which withstand retort and pasteurization.

### Flexible packaging material

In some examples, a flexible packaging material is described. The flexible packaging material may be produced by any of the methods described herein. Each component of the flexible packaging material will be discussed in the sections which follow.

In some examples, the flexible packaging material comprises a laminate structure with sufficient bond strength to avoid delamination of the layers, in particular delamination at the interface between the first flexible substrate on which a printed ink composition is disposed and the second flexible substrate. In some examples, the lamination bond strength is measured according to ASTM F0904-98R08. In some examples, the lamination bond strength is measured 7 days after lamination. In some examples, the lamination bond strength is measured 30 days after lamination. In some examples, the lamination bond strength is measured 7 days and 30 days after lamination or as required by the end user.

In some examples, the flexible packaging material has a lamination bond strength as measured by ASTM F0904-98R08. In some examples, the flexible packaging material has a lamination bond strength of at least about 0.039 N/mm (1.0 N/inch), for example at least about 0.059 N/mm (1.5 N/inch) for example at least about 0.078 N/mm (2.0 N/inch) for example at least about 0.098 N/mm (2.5 N/inch) for example at least about 0.118 N/mm (3.0 N/inch) for example at least about 0.137 N/mm (3.5 N/inch) for example at least about 0.157 N/mm (4.0 N/ inch) for example at least about 0.197 N/mm (5.0 N/inch) as measured by ASTM F0904-98R08.

In some examples, the flexible packaging material has a lamination bond strength of at least about 0.137 N/mm (3.5 N/inch) as measured by ASTM F0904-98R08.

### First Flexible Substrate (Print Substrate)

The first flexible substrate, to which an ink composition may be printed (and thus is also referred to herein as the print substrate) may be any material suitable for use in a lamination process, and suitable for use in a flexible packaging material.
Since the first flexible substrate forms the outermost layer of the final, laminated flexible packaging material as prepared in the methods described herein, in some examples the flexible substrate is transparent in order that the printed image or information is visible to the consumer.
In some examples, the first flexible substrate comprises a film of a polymer, for example a thermoplastic polymer. In some examples, the first flexible substrate comprises a film of biaxially oriented polypropylene (BOPP), polyethylene terephthalate (PET) or oriented polyamide (OPA). In some examples, the first flexible substrate comprises a film of biaxially oriented polypropylene (BOPP) or polyethylene terephthalate (PET). In some examples, the PET film may comprise PET-silicon oxide, PET-aluminium oxide, or PET-PVDC.
In some examples, the first flexible substrate comprises a thin film of a polymer, wherein the film is less than 100 µm in thickness, for example less than 90 µm in thickness, less than 80 µm in thickness, less than 70 µm in thickness, less than 60 µm in thickness, less than 50 µm in thickness, less than 40 µm in thickness, less than 30 µm in thickness, less than 20 µm in thickness, less than 15 µm in thickness. In some examples, the film of polymer is about 12 µm in thickness.
In some example, the first flexible substrate comprises a thin film of a polymer, wherein the film is greater than 12 µm in thickness, for example greater than 15 µm in thickness, greater than 20 µm in thickness, greater than 30 µm in thickness, greater than 40 µm in thickness, greater than 50 µm in thickness, greater than 60 µm in thickness, greater than 70 µm in thickness, greater than 80 µm in thickness, greater than 90 µm in thickness. In some examples, the film of polymer is about 100 µm in thickness.
In some examples, the first flexible substrate has a primer on a surface onto which the ink composition is printed. In some examples, the first flexible substrate has a first surface on which a primer is disposed, the ink composition may then disposed on the primer disposed on the surface of the first flexible substrate.

The primer comprises a primer resin. In some examples, the primer resin may be selected from the group comprising or consisting of hydroxyl containing resins, carboxylic group containing resins, and amine based polymer formulations. In some examples a hydroxyl containing resin may be selected from polyvinyl alcohol resins, e.g. polyvinyl alcohol based as polyvinyl butyral formulation (Butvar, Eastman), Vinnol® (Wacker polymers), cellulose derivative additives (Eastman), polyester (Dynapol, Evonic) and polyurethane based formulation with hydroxyl groups. In some examples, the carboxylic group containing resins may be selected from: olefin co-acrylic or methacrylic acid based copolymers, polyacrylic acid based polymers, polylactic acid based polymers. In some examples, the amine based polymer formulations may be selected from polyamines, polyethylene imines. The primer resin may be selected from the group comprising, or consisting of, a polyvinyl alcohol resin, cellulose based resins, a polyester, a polyamine, a polyethylene imine resin, polyamide resin, polyurethane, copolymers of an alkylene monomer and an acrylic or methacrylic acid monomer, polyacrylic polymers
In some examples, the primer resin comprises a carboxylic functional group, an amine functional group or a polyol functional group. In some examples, the primer resin comprises an amine functional group or a carboxylic functional group.
In some examples, the primer resin comprises an amine functional group. In some examples, the primer resin comprises or consists of a polyethylene imine resin. An example of a material suitable as a primer is DP050 (available from Michelman, Inc.).
In some examples, the primer on the first flexible substrate of the flexible packaging material comprises a crosslinked primer resin.
In some examples, the primer on the surface of the flexible print substrate surface onto which the ink composition is printed is provided in an amount such that the coat weight of the primer resin on the print substrate is at least 0.01 g/m², in some examples at least 0.05 g/m², in some examples at least 0.1 g/m², in some examples at least 0.15 g/m², in some examples about 0.18 g/m². In some examples the primer is provided in an amount such that the coat weight of the primer resin on the print substrate is up to about 0.2 g/m², in some examples up to about 0.5 g/m², in some examples up to about 1 g/m², in some examples up to about 1.5 g/m².

The first flexible substrate has a primer on the first surface and the ink composition is printed onto the primer on the first surface of the first flexible substrate.
In some examples, the first flexible substrate has a first surface on which a printed image or information is disposed, with a second surface of the first flexible substrate forming the outermost surface of the flexible packaging material. The second surface of the first flexible substrate being a surface other than the surface on which the ink composition is printed, for example, the second surface of the first flexible substrate may be a surface opposing the first surface of the first flexible substrate.
In some examples, the first flexible substrate is printed with an image or information on a first surface of the first flexible substrate. The image or information may be reverse printed onto the first surface of the substrate with a second surface of the first flexible substrate forming the outermost surface of the flexible packaging material and the printed image or information appearing the right way round when viewed through the second surface of the first flexible substrate. In this way, the printed image or information is embedded within the multi-layer structure of the flexible packaging material and not on the outermost surface, and thus protected from damage.

### Ink Composition

The ink composition which may be printed onto the first flexible substrate, for example a first surface of the first flexible substrate on which a primer is disposed, may comprise a thermoplastic resin.

In some examples, the ink composition may be a liquid ink composition such as a solvent based or solvent free ink composition used for offset, flexographic or rotogravure technologies, or a powder ink composition such as powder form resins used for toner technology, e.g. dry electrostatic printing.

In some examples, the thermoplastic resin of the ink composition comprises a carboxylic functional group, an amine functional group or a polyol functional group. In some examples, the thermoplastic resin of the ink composition comprises a carboxylic functional group.

In some examples, the thermoplastic resin comprises a polymer having acidic side groups. In some examples, the acidic side groups may be in free acid form or may be in the form of an anion and associated with a counterion, generally metal counterions, e.g. a metal selected from the alkali metals, such as lithium, sodium and potassium, alkali earth metals, such as magnesium or calcium, and transition metals, such as zinc. The polymer having acidic sides groups can be selected from resins such as co-polymers of ethylene and an ethylenically unsaturated acid of either acrylic acid or methacrylic acid; and ionomers thereof, such as methacrylic acid and ethylene-acrylic or methacrylic acid co-polymers which are at least partially neutralized with metal ions (e.g. Zn, Na, Li) such as SURLYN® ionomers. The polymer comprising acidic side groups can be a co-polymer of ethylene and an ethylenically unsaturated acid of either acrylic or methacrylic acid, where the ethylenically unsaturated acid of either acrylic or methacrylic acid constitute from 5 wt% to about 25 wt% of the co-polymer, in some examples from 10 wt% to about 20 wt% of the co-polymer.

In some examples, the thermoplastic resin of the ink composition comprises polyolefin copolymers, polyethylene co-acrylic copolymers, polyethylene co-methacrylic copolymers, polyethylene co-vinyl acetate copolymers, ionomers, or combinations thereof. In some examples the thermoplastic resin of the ink composition comprises or consists of alkylene acrylic or methacrylic acid resins, polyurethane resins, polyethylene imine resins, polyamide resin, polyvinyl alcohol and combinations thereof.

The ink composition may be an electrostatic ink composition, for example a liquid electrophotographic ink composition. In some examples, the ink composition is a liquid electrophotographic (LEP) ink composition comprising a thermoplastic resin. In some examples, the thermoplastic resin comprises or consists of a polymer having acidic side groups. In some examples the electrostatic ink composition comprises a polymer having acid side groups. In some examples the electrostatic ink composition comprises a thermoplastic resin comprising a copolymer of an alkylene monomer and a monomer selected from acrylic acid and methacrylic acid.

### Electrostatic Ink Composition

Liquid electrophotographic printing, or electrostatic printing, is one method by which images or information can be printed onto substrates such as paper or plastic. The printing processes generally involve creating an image on a photoconductive surface, applying an ink having charged particles to the photoconductive surface, such that they selectively bind to the image, and then transferring the charged particles in the form of the image to a print substrate.

The ink composition printed on the first flexible substrate described herein may be an electrostatic ink composition, for example a liquid electrophotographic printing composition (also referred to herein as a LEP composition) printed on the first flexible substrate using a liquid electrophotographic printing process, e.g. a LEP printing process. In some examples, the electrostatic ink composition may comprise a colorant or pigment and a thermoplastic resin. An LEP composition may comprise a colorant or pigment, a thermoplastic resin and a carrier fluid or liquid. The LEP composition may further comprise an additive such as a charge director, charge adjuvant, surfactant, viscosity modifier, emulsifier and the like. In some examples, the LEP composition may not contain any pigment, or comprise substantially zero pigment and thus be a pigment-free composition, useful in providing a particular transparent gloss or sheen to a printed substrate.

In some examples, after printing, a LEP ink composition, which may be printed on the first flexible substrate, may comprise a reduced amount of carrier liquid compared with the LEP printing composition before printing. In some examples, an electrostatic ink composition, which may be printed on the first flexible substrate, may be substantially free from carrier liquid. Substantially free from carrier liquid may indicate that the ink printed on the print substrate contains less than 5 wt% carrier liquid, in some examples, less than 2 wt% carrier liquid, in some examples less than 1 wt% carrier liquid, in some examples less than 0.5 wt% carrier liquid. In some examples, an electrostatic ink composition that may be printed on the first flexible substrate is free from carrier liquid.

Each of these components of an electrostatic ink composition, which may be the ink composition printed on the first flexible substrate, will be described separately in the subsections which follow.

### Colorant

An electrostatic ink composition may comprise a colorant. The colorant may be a dye or pigment. The colorant can be any colorant compatible with the liquid carrier and useful for electrophotographic printing. For example, the colorant may be present as pigment particles, or may comprise a resin (in addition to the polymers described herein) and a pigment. In some examples, the colorant is selected from a cyan pigment, a magenta pigment, a yellow pigment and a black pigment. For example, pigments by Hoechst including Permanent Yellow DHG, Permanent Yellow GR, Permanent Yellow G, Permanent Yellow NCG-71, Permanent Yellow GG, Hansa Yellow RA, Hansa Brilliant Yellow 5GX-02, Hansa Yellow X, NOVAPERM® YELLOW HR, NOVAPERM® YELLOW FGL, Hansa Brilliant Yellow 10GX, Permanent Yellow G3R-01, HOSTAPERM® YELLOW H4G, HOSTAPERM® YELLOW H3G, HOSTAPERM® ORANGE GR, HOSTAPERM® SCARLET GO, Permanent Rubine F6B; pigments by Sun Chemical including L74-1357 Yellow, L75-1331 Yellow, L75-2337 Yellow; pigments by Heubach including DALAMAR® YELLOW YT-858-D; pigments by Ciba-Geigy including CROMOPHTHAL® YELLOW 3 G, CROMOPHTHAL® YELLOW GR, CROMOPHTHAL® YELLOW 8 G, IRGAZINE® YELLOW 5GT, IRGALITE® RUBINE 4BL, MONASTRAL® MAGENTA, MONASTRAL® SCARLET, MONASTRAL® VIOLET, MONASTRAL® RED, MONASTRAL® VIOLET; pigments by BASF including LUMOGEN® LIGHT YELLOW, PALIOGEN® ORANGE, HELIOGEN® BLUE L 690 IF, HELIOGEN® BLUE TBD 7010, HELIOGEN® BLUE K 7090, HELIOGEN® BLUE L 710 IF, HELIOGEN® BLUE L 6470, HELIOGEN® GREEN K 8683, HELIOGEN® GREEN L 9140; pigments by Mobay including QUINDO® MAGENTA, INDOFAST® BRILLIANT SCARLET, QUINDO® RED 6700, QUINDO® RED 6713, INDOFAST® VIOLET; pigments by Cabot including Maroon B STERLING® NS BLACK, STERLING® NSX 76, MOGUL® L; pigments by DuPont including TIPURE® R-101; and pigments by Paul Uhlich including UHLICH® BK 8200. Where the pigment is a white pigment particle, the pigment particle may be selected from the group consisting of TiO₂, calcium carbonate, zinc oxide, and mixtures thereof. In some examples the white pigment particle may comprise an alumina-TiO₂ pigment.

In some examples, the colorant or pigment particles may have a median particle size or d₅₀ of less than 20 µm, for example less than 15 µm, for example less than 10 µm, for example less than 5 µm, for example less than 4 µm, for example less than 3 µm, for example less than 2 µm, for example less than 1 µm, for example less than 0.9 µm, for example less than 08 µm, for example less than 0.7 µm, for example less than 0.6 µm, for example less than 0.5 µm. Unless otherwise stated, the particle size of the colorant or pigment particle and the resin coated pigment particle is determined using laser diffraction on a Malvern Mastersizer 2000 according to the standard procedure as described in the operating manual.

The colorant or pigment particle may be present in an electrostatic ink composition in an amount of from 10 wt% to 80 wt% of the total amount of resin and pigment, in some examples 15 wt% to 80 wt%, in some examples 15 wt% to 60 wt%, in some examples 15 wt% to 50 wt%, in some examples 15 wt% to 40 wt%, in some examples 15 wt% to 30 wt% of the total amount of resin and colorant. In some examples, the colorant or pigment particle may be present in an electrostatic ink composition in an amount of at least 50 wt% of the total amount of resin and colorant or pigment, for example at least 55 wt% of the total amount of resin and colorant or pigment.

### Polymer Resin

In some examples, the ink composition is an electrostatic ink composition comprising a polymer resin as the thermoplastic resin. In some examples, the electrostatic ink composition comprises a polymer resin comprising a polymer having acidic side groups. In some examples, an electrostatic ink composition comprises a polymer resin comprising a copolymer of an alkylene monomer and a monomer selected from acrylic acid and methacrylic acid.

The polymer resin or thermoplastic resin may be referred to as a thermoplastic polymer. In some examples, the polymer resin may comprise ethylene or propylene acrylic acid co-polymers; ethylene or propylene methacrylic acid co-polymers; ethylene vinyl acetate co-polymers; co-polymers of ethylene or propylene (e.g. 80 wt% to 99.9 wt%), and alkyl (e.g. C1 to C5) ester of methacrylic or acrylic acid (e.g. 0.1 wt% to 20 wt%); co-polymers of ethylene (e.g. 80 wt% to 99.9 wt%), acrylic or methacrylic acid (e.g. 0.1 wt% to 20.0 wt%) and alkyl (e.g. C1 to C5) ester of methacrylic or acrylic acid (e.g. 0.1 wt% to 20 wt%); co-polymers of ethylene or propylene (e.g. 70 wt% to 99.9 wt%) and maleic anhydride (e.g. 0.1 wt% to 30 wt%); polyethylene; polystyrene; isotactic polypropylene (crystalline); co-polymers of ethylene ethylene ethyl acrylate; polyesters; polyvinyl toluene; polyamides; styrene/butadiene co-polymers; epoxy resins; acrylic resins (e.g. co-polymer of acrylic or methacrylic acid and at least one alkyl ester of acrylic or methacrylic acid wherein alkyl may have from 1 to about 20 carbon atoms, such as methyl methacrylate (e.g. 50% to 90%)/methacrylic acid (e.g. 0 wt% to 20 wt%)/ethylhexylacrylate (e.g. 10 wt% to 50 wt%)); ethylene-acrylate terpolymers: ethylene-acrylic esters-maleic anhydride (MAH) or glycidyl methacrylate (GMA) terpolymers; ethylene-acrylic acid ionomers or combinations thereof.

The polymer resin may comprise a polymer having acidic side groups. Examples of the polymer having acidic side groups will now be described. The polymer having acidic side groups may have an acidity of 50 mg KOH/g or more, in some examples an acidity of 60 mg KOH/g or more, in some examples an acidity of 70 mg KOH/g or more, in some examples an acidity of 80 mg KOH/g or more, in some examples an acidity of 90 mg KOH/g or more, in some examples an acidity of 100 mg KOH/g or more, in some examples an acidity of 105 mg KOH/g or more, in some examples 110 mg KOH/g or more, in some examples 115 mg KOH/g or more. The polymer having acidic side groups may have an acidity of 200 mg KOH/g or less, in some examples 190 mg or less, in some examples 180 mg or less, in some examples 130 mg KOH/g or less, in some examples 120 mg KOH/g or less. Acidity of a polymer, as measured in mg KOH/g can be measured using standard procedures, for example using the procedure described in ASTM D1386.

The polymer resin may comprise a polymer having acidic side groups, that has a melt flow rate of less than about 70 g/10 minutes, in some examples about 60 g/10 minutes or less, in some examples about 50 g/10 minutes or less, in some examples about 40 g/10 minutes or less, in some examples 30 g/10 minutes or less, in some examples 20 g/10 minutes or less, in some examples 10 g/10 minutes or less. In some examples, all polymers having acidic side groups and/or ester groups in the particles each individually have a melt flow rate of less than 90 g/10 minutes, 80 g/10 minutes or less, in some examples 80 g/10 minutes or less, in some examples 70 g/10 minutes or less, in some examples 70 g/10 minutes or less, in some examples 60 g/10 minutes or less.

The polymer having acidic side groups can have a melt flow rate of about 10 g/10 minutes to about 120 g/10 minutes, in some examples about 10 g/10 minutes to about 70 g/10 minutes, in some examples about 10 g/10 minutes to 40 g/10 minutes, in some examples 20 g/10 minutes to 30 g/10 minutes. The polymer having acidic side groups can have a melt flow rate of, in some examples, about 50 g/10 minutes to about 120 g/10 minutes, in some examples 60 g/10 minutes to about 100 g/10 minutes. The melt flow rate can be measured using standard procedures, for example as described in ASTM D1238.

The acidic side groups may be in free acid form or may be in the form of an anion and associated with a counterion, generally metal counterions, e.g. a metal selected from the alkali metals, such as lithium, sodium and potassium, alkali earth metals, such as magnesium or calcium, and transition metals, such as zinc. The polymer having acidic sides groups can be selected from resins such as co-polymers of ethylene and an ethylenically unsaturated acid of either acrylic acid or methacrylic acid; and ionomers thereof, such as methacrylic acid and ethylene-acrylic or methacrylic acid co-polymers which are at least partially neutralized with metal ions (e.g. Zn, Na, Li) such as SURLYN® ionomers. The polymer comprising acidic side groups can be a co-polymer of ethylene and an ethylenically unsaturated acid of either acrylic or methacrylic acid, where the ethylenically unsaturated acid of either acrylic or methacrylic acid constitute from 5 wt% to about 25 wt% of the co-polymer, in some examples from 10 wt% to about 20 wt% of the co-polymer.

The polymer resin may comprise two different polymers having acidic side groups. The two polymers having acidic side groups may have different acidities, which may fall within the ranges mentioned above. The polymer resin may comprise a first polymer having acidic side groups that has an acidity of from 10 mg KOH/g to 110 mg KOH/g, in some examples 20 mg KOH/g to 110 mg KOH/g, in some examples 30 mg KOH/g to 110 mg KOH/g, in some examples 50 mg KOH/g to 110 mg KOH/g, and a second polymer having acidic side groups that has an acidity of 110 mg KOH/g to 130 mg KOH/g.

The polymer resin may comprise two different polymers having acidic side groups: a first polymer having acidic side groups that has a melt flow rate of about 10 g/10 minutes to about 50 g/10 minutes and an acidity of from 10 mg KOH/g to 110 mg KOH/g, in some examples 20 mg KOH/g to 110 mg KOH/g, in some examples 30 mg KOH/g to 110 mg KOH/g,in some examples 50 mg KOH/g to 110 mg KOH/g, and a second polymer having acidic side groups that has a melt flow rate of about 50 g/10 minutes to about 120 g/10 minutes and an acidity of 110 mg KOH/g to 130 mg KOH/g. The first and second polymers may be absent of ester groups.

The ratio of the first polymer having acidic side groups to the second polymer having acidic side groups can be from about 10:1 to about 2:1. The ratio can be from about 6:1 to about 3:1, in some examples about 4:1.

The polymer resin may comprise a polymer having a melt viscosity of 15000 poise or less, in some examples a melt viscosity of 10000 poise or less, in some examples 1000 poise or less, in some examples 100 poise or less, in some examples 50 poise or less, in some examples 10 poise or less; said polymer may be a polymer having acidic side groups as described herein. The polymer resin may comprise a first polymer having a melt viscosity of 15000 poise or more, in some examples 20000 poise or more, in some examples 50000 poise or more, in some examples 70000 poise or more; and in some examples, the polymer resin may comprise a second polymer having a melt viscosity less than the first polymer, in some examples a melt viscosity of 15000 poise or less, in some examples a melt viscosity of 10000 poise or less, in some examples 1000 poise or less, in some examples 100 poise or less, in some examples 50 poise or less, in some examples 10 poise or less. The polymer resin may comprise a first polymer having a melt viscosity of more than 60000 poise, in some examples from 60000 poise to 100000 poise, in some examples from 65000 poise to 85000 poise; a second polymer having a melt viscosity of from 15000 poise to 40000 poise, in some examples 20000 poise to 30000 poise, and a third polymer having a melt viscosity of 15000 poise or less, in some examples a melt viscosity of 10000 poise or less, in some examples 1000 poise or less, in some examples 100 poise or less, in some examples 50 poise or less, in some examples 10 poise or less; an example of the first polymer is Nucrel 960 (from DuPont), and example of the second polymer is Nucrel 699 (from DuPont), and an example of the third polymer is AC-5120 or AC-5180 (from Honeywell). The first, second and third polymers may be polymers having acidic side groups as described herein. The melt viscosity can be measured using a rheometer, e.g. a commercially available AR-2000 Rheometer from Thermal Analysis Instruments, using the geometry of: 25mm steel plate-standard steel parallel plate, and finding the plate over plate rheometry isotherm at 120°C, 0.01 Hz shear rate.

If the polymer resin comprises a single type of polymer, the polymer (excluding any other components of the electrophotographic ink composition) may have a melt viscosity of 6000 poise or more, in some examples a melt viscosity of 8000 poise or more, in some examples a melt viscosity of 10000 poise or more, in some examples a melt viscosity of 12000 poise or more. If the polymer resin comprises a plurality of polymers all the polymers of the polymer resin may together form a mixture (excluding any other components of the electrophotographic ink composition) that has a melt viscosity of 6000 poise or more, in some examples a melt viscosity of 8000 poise or more, in some examples a melt viscosity of 10000 poise or more, in some examples a melt viscosity of 12000 poise or more. Melt viscosity can be measured using standard techniques. The melt viscosity can be measured using a rheometer, e.g. a commercially available AR-2000 Rheometer from Thermal Analysis Instruments, using the geometry of: 25mm steel plate-standard steel parallel plate, and finding the plate over plate rheometry isotherm at 120°C, 0.01 Hz shear rate.

The polymer resin may comprise two different polymers having acidic side groups that are selected from co-polymers of ethylene and an ethylenically unsaturated acid of either acrylic acid or methacrylic acid; or ionomers thereof, such as methacrylic acid and ethylene-acrylic or methacrylic acid co-polymers which are at least partially neutralized with metal ions (e.g. Zn, Na, Li) such as SURLYN® ionomers. The polymer resin may comprise (i) a first polymer that is a co-polymer of ethylene and an ethylenically unsaturated acid of either acrylic acid and methacrylic acid, wherein the ethylenically unsaturated acid of either acrylic or methacrylic acid constitutes from 8 wt% to about 16 wt% of the co-polymer, in some examples 10 wt% to 16 wt% of the co-polymer; and (ii) a second polymer that is a co-polymer of ethylene and an ethylenically unsaturated acid of either acrylic acid and methacrylic acid, wherein the ethylenically unsaturated acid of either acrylic or methacrylic acid constitutes from 12 wt% to about 30 wt% of the co-polymer, in some examples from 14 wt% to about 20 wt% of the co-polymer, in some examples from 16 wt% to about 20 wt% of the co-polymer in some examples from 17 wt% to 19 wt% of the co-polymer.

The polymer resin may comprise a polymer having acidic side groups, as described above (which may be free of ester side groups), and a polymer having ester side groups. The polymer having ester side groups may be a thermoplastic polymer. The polymer having ester side groups may further comprise acidic side groups. The polymer having ester side groups may be a co-polymer of a monomer having ester side groups and a monomer having acidic side groups. The polymer may be a co-polymer of a monomer having ester side groups, a monomer having acidic side groups, and a monomer absent of any acidic and ester side groups. The monomer having ester side groups may be a monomer selected from esterified acrylic acid or esterified methacrylic acid. The monomer having acidic side groups may be a monomer selected from acrylic or methacrylic acid. The monomer absent of any acidic and ester side groups may be an alkylene monomer, including, for example, ethylene or propylene. The esterified acrylic acid or esterified methacrylic acid may, respectively, be an alkyl ester of acrylic acid or an alkyl ester of methacrylic acid. The alkyl group in the alkyl ester of acrylic or methacrylic acid may be an alkyl group having 1 to 30 carbons, in some examples 1 to 20 carbons, in some examples 1 to 10 carbons; in some examples selected from methyl, ethyl, iso-propyl, n-propyl, t-butyl, iso-butyl, n-butyl and pentyl.

The polymer having ester side groups may be a co-polymer of a first monomer having ester side groups, a second monomer having acidic side groups and a third monomer which is an alkylene monomer absent of any acidic and ester side groups. The polymer having ester side groups may be a co-polymer of (i) a first monomer having ester side groups selected from esterified acrylic acid or esterified methacrylic acid, in some examples an alkyl ester of acrylic or methacrylic acid, (ii) a second monomer having acidic side groups selected from acrylic or methacrylic acid and (iii) a third monomer which is an alkylene monomer selected from ethylene and propylene. The first monomer may constitute 1% to 50% by weight of the co-polymer, in some examples 5% to 40% by weight, in some examples 5% to 20% by weight of the co-polymer, in some examples 5% to 15% by weight of the co-polymer. The second monomer may constitute 1% to 50 % by weight of the co-polymer, in some examples 5% to 40% by weight of the co-polymer, in some examples 5% to 20% by weight of the co-polymer, in some examples 5% to 15% by weight of the co-polymer. The first monomer can constitute 5% to 40 % by weight of the co-polymer, the second monomer constitutes 5% to 40% by weight of the co-polymer, and with the third monomer constituting the remaining weight of the co-polymer. In some examples, the first monomer constitutes 5% to 15% by weight of the co-polymer, the second monomer constitutes 5% to 15% by weight of the co-polymer, with the third monomer constituting the remaining weight of the co-polymer. In some examples, the first monomer constitutes 8% to 12% by weight of the co-polymer, the second monomer constitutes 8% to 12% by weight of the co-polymer, with the third monomer constituting the remaining weight of the co-polymer. In some examples, the first monomer constitutes about 10% by weight of the co-polymer, the second monomer constitutes about 10% by weight of the co-polymer, and with the third monomer constituting the remaining weight of the co-polymer. The polymer may be selected from the Bynel® class of monomer, including Bynel 2022 and Bynel 2002, which are available from DuPont®.

The polymer having ester side groups may constitute 1% or more by weight of the total amount of the resin polymers, e.g. thermoplastic resin polymers, in the liquid electrophotographic ink composition and/or the ink printed on the print substrate, e.g. the total amount of the polymer or polymers having acidic side groups and polymer having ester side groups. The polymer having ester side groups may constitute 5% or more by weight of the total amount of the resin polymers, e.g. thermoplastic resin polymers, in some examples 8% or more by weight of the total amount of the resin polymers, e.g. thermoplastic resin polymers, in some examples 10% or more by weight of the total amount of the resin polymers, e.g. thermoplastic resin polymers, in some examples 15% or more by weight of the total amount of the resin polymers, e.g. thermoplastic resin polymers, in some examples 20% or more by weight of the total amount of the resin polymers, e.g. thermoplastic resin polymers, in some examples 25% or more by weight of the total amount of the resin polymers, e.g. thermoplastic resin polymers, in some examples 30% or more by weight of the total amount of the resin polymers, e.g. thermoplastic resin polymers, in some examples 35% or more by weight of the total amount of the resin polymers, e.g. thermoplastic resin polymers, in the liquid electrophotographic composition and/or the ink printed on the print substrate. The polymer having ester side groups may constitute from 5% to 50% by weight of the total amount of the resin polymers, e.g. thermoplastic resin polymers, in the liquid electrophotographic composition and/or the ink printed on the print substrate, in some examples 10% to 40% by weight of the total amount of the resin polymers, e.g. thermoplastic resin polymers, in the liquid electrophotographic composition and/or the ink composition printed on the print substrate, in some examples 5% to 30% by weight of the total amount of the resin polymers, e.g. thermoplastic resin polymers, in the liquid electrophotographic composition and/or the ink composition printed on the print substrate, in some examples 5% to 15% by weight of the total amount of the resin polymers, e.g. thermoplastic resin polymers, in the liquid electrophotographic composition and/or the ink composition printed on the print substrate in some examples 15% to 30% by weight of the total amount of the resin polymers, e.g. thermoplastic resin polymers, in the liquid electrophotographic composition and/or the ink composition printed on the print substrate.

The polymer having ester side groups may have an acidity of 50 mg KOH/g or more, in some examples an acidity of 60 mg KOH/g or more, in some examples an acidity of 70 mg KOH/g or more, in some examples an acidity of 80 mg KOH/g or more. The polymer having ester side groups may have an acidity of 100 mg KOH/g or less, in some examples 90 mg KOH/g or less. The polymer having ester side groups may have an acidity of 60 mg KOH/g to 90 mg KOH/g, in some examples 70 mg KOH/g to 80 mg KOH/g.

The polymer having ester side groups may have a melt flow rate of about 10 g/10 minutes to about 120 g/10 minutes, in some examples about 10 g/10 minutes to about 50 g/10 minutes, in some examples about 20 g/10 minutes to about 40 g/10 minutes, in some examples about 25 g/10 minutes to about 35 g/10 minutes.

The polymer, polymers, co-polymer or co-polymers of the thermoplastic resin can in some examples be selected from the Nucrel family of toners (e.g. Nucrel 403™, Nucrel 407™, Nucrel 609HS™, Nucrel 908HS™, Nucrel 1202HC™, Nucrel 30707™, Nucrel 1214™, Nucrel 903™, Nucrel 3990™, Nucrel 910™, Nucrel 925™, Nucrel 699™, Nucrel 599™, Nucrel 960™, Nucrel RX 76™, Nucrel 2806™, Bynell 2002, Bynell 2014, Bynell 2020 and Bynell 2022, (sold by E. I. du PONT)), the AC family of toners (e.g. AC-5120, AC-5180, AC-540, AC-580 (sold by Honeywell)), the Aclyn family of toners (e.g. Aclyn 201, Aclyn 246, Aclyn 285, and Aclyn 295), and the Lotader family of toners (e.g. Lotader 2210, Lotader, 3430, and Lotader 8200 (sold by Arkema)).

The polymer resin can constitute about 5 to 90 %, in some examples about 50 to 80 %, by weight of the solids of the liquid electrophotographic composition and/or the ink composition printed on the print substrate. The resin can constitute about 60 to 95 %, in some examples about 70 to 95 %, by weight of the solids of the liquid electrophotographic composition and/or the ink composition printed on the print substrate.

### Carrier Liquid

In some examples, an electrostatic ink composition described herein comprises polymer resin coated pigment particles, or polymer resin particles, which are formed in and/or dispersed in a carrier fluid or carrier liquid. Before application to the print substrate, e.g. the first flexible substrate, in a printing process, e.g. an electrostatic printing process, the ink composition may be an electrostatic ink composition, which may be in dry form, for example in the form of flowable pigment particles coated with the thermoplastic resin. In some examples, before application to the print substrate in an electrostatic printing process, an electrostatic ink composition may be in liquid form; and may comprise a carrier liquid in which is suspended pigment particles coated with the thermoplastic resin.

Generally, the carrier liquid acts as a reaction solvent in preparing the coated pigment particles, and can also act as a dispersing medium for the other components in the resulting electrostatic ink composition. In some examples, the carrier liquid is a liquid which does not dissolve the polymer resin at room temperature. In some examples, the carrier liquid is a liquid which dissolves the polymer resin at elevated temperatures. For example, the polymer resin may be soluble in the carrier liquid when heated to a temperature of at least 80 °C, for example 90 °C, for example 100 °C, for example 110 °C, for example 120 °C. For example, the carrier liquid can comprise or be a hydrocarbon, silicone oil, vegetable oil, etc. The carrier liquid can include, an insulating, non-polar, non-aqueous liquid that can be used as a medium for toner particles. The carrier liquid can include compounds that have a resistivity in excess of about 10⁹ ohm-cm. The carrier liquid may have a dielectric constant below about 5, in some examples below about 3. The carrier liquid can include hydrocarbons. The hydrocarbon can include an aliphatic hydrocarbon, an isomerized aliphatic hydrocarbon, branched chain aliphatic hydrocarbons, aromatic hydrocarbons, and combinations thereof. Examples of the carrier liquids include aliphatic hydrocarbons, isoparaffinic compounds, paraffinic compounds, dearomatized hydrocarbon compounds, and the like. In particular, the carrier liquids can include Isopar-G™, Isopar-H™, Isopar-L™, Isopar-M™, Isopar-K™, Isopar-V™, Norpar 12™, Norpar 13™, Norpar 15™, Exxol D40™, Exxol D80™, Exxol D100™, Exxol D130™, and Exxol D140™ (each sold by EXXON CORPORATION); Teclen N-16™, Teclen N-20™, Teclen N-22™, Nisseki Naphthesol L™, Nisseki Naphthesol M™, Nisseki Naphthesol H™, #0 Solvent L™, #0 Solvent MTM, #0 Solvent H™, Nisseki Isosol 300™, Nisseki Isosol 400™, AF-4™, AF-5™, AF-6™ and AF-7™ (each sold by NIPPON OIL CORPORATION); IP Solvent 1620™ and IP Solvent 2028™ (each sold by IDEMITSU PETROCHEMICAL CO., LTD.); Amsco OMS™ and Amsco 460™ (each sold by AMERICAN MINERAL SPIRITS CORP.); and Electron, Positron, New II, Purogen HF (100% synthetic terpenes) (sold by ECOLINK™).

Before printing, the carrier liquid can constitute about 20% to 99.5% by weight of an electrostatic ink composition, in some examples 50% to 99.5% by weight of an electrostatic ink composition. Before printing, the carrier liquid may constitute about 40 to 90 % by weight of an electrostatic ink composition. Before printing, the carrier liquid may constitute about 60% to 80% by weight of an electrostatic ink composition. Before printing, the carrier liquid may constitute about 90% to 99.5% by weight of an electrostatic ink composition, in some examples 95% to 99% by weight of an electrostatic ink composition.

An electrostatic ink composition, when printed on a print substrate, e.g. the first flexible substrate, may be substantially free from carrier liquid. In an electrostatic printing process and/or afterwards, the carrier liquid may be removed, e.g. by an electrophoresis processes during printing and/or evaporation, such that substantially just solids are transferred to the print substrate. Substantially free from carrier liquid may indicate that the ink printed on the print substrate contains less than 5 wt% carrier liquid, in some examples, less than 2 wt% carrier liquid, in some examples less than 1 wt% carrier liquid, in some examples less than 0.5 wt% carrier liquid. In some examples, the ink printed on a print substrate, e.g. the first flexible substrate, is free from carrier liquid.

### Charge Director and Charge Adjuvant

A liquid electrophotographic composition and/or the ink composition printed on the print substrate can comprise a charge director. A charge director can be added to an electrostatic composition to impart a charge of a desired polarity and/or maintain sufficient electrostatic charge on the particles of an electrostatic ink composition. The charge director may comprise ionic compounds, including, for example, metal salts of fatty acids, metal salts of sulfosuccinates, metal salts of oxyphosphates, metal salts of alkyl-benzenesulfonic acid, metal salts of aromatic carboxylic acids or sulfonic acids, as well as zwitterionic and non-ionic compounds, such as polyoxyethylated alkylamines, lecithin, polyvinylpyrrolidone, organic acid esters of polyvalent alcohols, etc. The charge director can be selected from oil-soluble petroleum sulfonates (e.g. neutral Calcium Petronate™, neutral Barium Petronate™, and basic Barium Petronate™), polybutylene succinimides (e.g. OLOA™ 1200 and Amoco 575), and glyceride salts (e.g. sodium salts of phosphated mono- and diglycerides with unsaturated and saturated acid substituents), sulfonic acid salts including, for example, barium, sodium, calcium, and aluminium salts of sulfonic acid. The sulfonic acids may include, for example , alkyl sulfonic acids, aryl sulfonic acids, and sulfonic acids of alkyl succinates (e.g. see WO 2007/130069). The charge director can impart a negative charge or a positive charge on the resin-containing particles of an electrostatic ink composition.

The charge director can comprise a sulfosuccinate moiety of the general formula:
[Rₐ-O-C(O)CH₂CH(SO₃⁻)C(O)-O-R_{b}], where each of Rₐ and R_{b} is an alkyl group. In some examples, the charge director comprises nanoparticles of a simple salt and a sulfosuccinate salt of the general formula MAₙ, wherein M is a metal, n is the valence of M, and A is an ion of the general formula [Rₐ-O-C(O)CH₂CH(SO₃⁻)C(O)-O-R_{b}], where each of Rₐ and R_{b} is an alkyl group, or other charge directors as found in WO2007130069, which is incorporation herein by reference in its entirety. As described in WO2007130069, the sulfosuccinate salt of the general formula MAₙ is an example of a micelle forming salt. The charge director may be substantially free or free of an acid of the general formula HA, where A is as described above. The charge director may comprise micelles of said sulfosuccinate salt enclosing at least some of the nanoparticles. The charge director may comprise at least some nanoparticles having a size of 200 nm or less, in some examples 2 nm or more. As described in WO2007130069, simple salts are salts that do not form micelles by themselves, although they may form a core for micelles with a micelle forming salt. The ions constructing the simple salts are all hydrophilic. The simple salt may comprise a cation selected from Mg , Ca , Ba , NH₄, tert-butyl ammonium, Li⁺, and Al⁺³, or from any sub-group thereof. The simple salt may comprise an anion selected from SO₄²⁻, PO³⁻, NO₃⁻, HPO₄²⁻, CO₃²⁻, acetate, trifluoroacetate (TFA), Cl⁻, Bf, F⁻, ClO₄⁻, and TiO₃⁴⁻, or from any sub-group thereof. The simple salt may be selected from CaCO₃, Ba₂TiO₃, Al₂(SO₄), Al(NO₃)₃, Ca₃(PO₄)₂, BaSO₄, BaHPO₄, Ba₂(PO₄)₃, CaSO₄, (NH₄)₂CO₃, (NH₄)₂SO₄, NH₄OAc, Tert- butyl ammonium bromide, NH₄NO₃, LiTFA, Al₂(SO₄)₃, LiClO₄ and LiBF₄, or any sub-group thereof. The charge director may further comprise basic barium petronate (BBP).

In the formula [Rₐ-O-C(O)CH₂CH(SO₃⁻)C(O)-O-R_{b}], in some examples, each of Rₐ and R_{b} is an aliphatic alkyl group. In some examples, each of Rₐ and R_{b} independently is a C₆₋₂₅ alkyl. In some examples, said aliphatic alkyl group is linear. In some examples, said aliphatic alkyl group is branched. In some examples, said aliphatic alkyl group includes a linear chain of more than 6 carbon atoms. In some examples, Rₐ and R_{b} are the same. In some examples, at least one of Rₐ and R_{b} is C₁₃H₂₇. In some examples, M is Na, K, Cs, Ca, or Ba. The formula [Rₐ-O-C(O)CH₂CH(SO₃⁻)C(O)-O-R_{b}] and/or the formula MAₙ may be as defined in any part of WO2007130069.

The charge director may comprise (i) soya lecithin, (ii) a barium sulfonate salt, such as basic barium petronate (BPP), and (iii) an isopropyl amine sulfonate salt. Basic barium petronate is a barium sulfonate salt of a 21-26 hydrocarbon alkyl, and can be obtained, for example, from Chemtura. An example isopropyl amine sulphonate salt is dodecyl benzene sulfonic acid isopropyl amine, which is available from Croda.

In an electrostatic ink composition, the charge director can constitute about 0.001% to 20%, in some examples 0.01 to 20% by weight, in some examples 0.01 to 10% by weight, in some examples 0.01 to 1% by weight of the solids of an electrostatic ink composition and/or ink composition printed on the print substrate. The charge director can constitute about 0.001 to 0.15 % by weight of the solids of a liquid electrophotographic ink composition and/or ink composition printed on the print substrate, in some examples 0.001 to 0.15 %, in some examples 0.001 to 0.02 % by weight of the solids of a liquid electrophotographic ink composition and/or ink composition printed on the print substrate. In some examples, a charge director imparts a negative charge on an electrostatic ink composition. The particle conductivity may range from 50 to 500 pmho/cm, in some examples from 200-350 pmho/cm.

A liquid electrophotographic ink composition and/or ink composition printed on the print substrate can include a charge adjuvant. A charge adjuvant may be present with a charge director, and may be different to the charge director, and act to increase and/or stabilise the charge on particles, e.g. resin-containing particles, of an electrostatic composition. The charge adjuvant can include, for example, barium petronate, calcium petronate, Co salts of naphthenic acid, Ca salts of naphthenic acid, Cu salts of naphthenic acid, Mn salts of naphthenic acid, Ni salts of naphthenic acid, Zn salts of naphthenic acid, Fe salts of naphthenic acid, Ba salts of stearic acid, Co salts of stearic acid, Pb salts of stearic acid, Zn salts of stearic acid, Al salts of stearic acid, Cu salts of stearic acid, Fe salts of stearic acid, metal carboxylates (e.g. Al tristearate, Al octanoate, Li heptanoate, Fe stearate, Fe distearate, Ba stearate, Cr stearate, Mg octanoate, Ca stearate, Fe naphthenate, Zn naphthenate, Mn heptanoate, Zn heptanoate, Ba octanoate, Al octanoate, Co octanoate, Mn octanoate, and Zn octanoate), Co lineolates, Mn lineolates, Pb lineolates, Zn lineolates, Ca oleates, Co oleates, Zn palmirate, Ca resinates, Co resinates, Mn resinates, Pb resinates, Zn resinates, AB diblock co-polymers of 2- ethylhexyl methacrylate-co-methacrylic acid calcium, and ammonium salts, co-polymers of an alkyl acrylamidoglycolate alkyl ether (e.g. methyl acrylamidoglycolate methyl ether-co-vinyl acetate), and hydroxy bis(3,5-di-tert- butyl salicylic) aluminate monohydrate. In some examples, the charge adjuvant is aluminium di and/or tristearate and/or aluminium di and/or tripalmitate.
The charge adjuvant can constitute about 0.1 to 5 % by weight of the solids of a liquid electrophotographic ink composition and/or ink composition printed on the print substrate. The charge adjuvant can constitute about 0.5 to 4 % by weight of the solids of a liquid electrophotographic ink composition and/or ink composition printed on the print substrate. The charge adjuvant can constitute about 1 to 3 % by weight of the solids of a liquid electrophotographic ink composition and/or ink composition printed on the print substrate.

### Other Additives

In some examples, an electrostatic ink composition may include an additive or a plurality of additives. The additive or plurality of additives may be added at any stage of the method. The additive or plurality of additives may be selected from a wax, a surfactant, biocides, organic solvents, viscosity modifiers, materials for pH adjustment, sequestering agents, preservatives, compatibility additives, emulsifiers and the like. The wax may be an incompatible wax. As used herein, "incompatible wax" may refer to a wax that is incompatible with the resin. Specifically, the wax phase separates from the resin phase upon the cooling of the resin fused mixture on a print substrate during and after the transfer of the ink film to the print substrate, e.g. from an intermediate transfer member, which may be a heated blanket.

### Cross-linking composition

The cross-linking composition may comprise a cross-linker, for example for crosslinking thermoplastic resins of the ink composition. Depositing a cross-linking composition comprising a cross-linker onto the printed ink composition, e.g. printed ink layer, disposed on the first flexible substrate may crosslink the thermoplastic resin of the ink composition. Crosslinking the thermoplastic resin of the ink composition may increase cohesion in the printed ink composition disposed on the first flexible substrate. Cross-linking the thermoplastic resin of the ink composition may increase the melting temperature of the ink composition.

The cross-linker is a cross-linker for crosslinking the thermoplastic resin and a cross-linker for crosslinking the primer resin of a primer. In some examples, the cross-linker may crosslink the thermoplastic resin within the ink composition, crosslink the primer resin within the primer and crosslink the thermoplastic resin of the ink composition with the primer resin of the primer.

The cross-linking composition comprising a cross-linker is deposited onto the printed ink composition, e.g. printed ink layer, disposed on a primer comprising a primer resin on a surface of the print substrate. Deposition of the cross-linking composition comprising a cross-linker onto the printed ink composition, e.g. printed ink layer, on the primed first flexible print substrate crosslinks the thermoplastic resin of the ink composition and crosslinks the primer resin of the primer. Crosslinking the thermoplastic resin of the ink composition may increase cohesion in the printed ink composition disposed on the print substrate. Crosslinking the thermoplastic resin of the ink composition may increase the melting temperature of the ink composition. Crosslinking the primer resin of the primer may increase cohesion within the primer and/or improve chemical resistance and water resistance of the primer. Crosslinking the primer resin may also limit mobility of the ink composition disposed on the primer layer. Crosslinking between the primer resin and the thermoplastic resin may improve binding between the primer and the ink composition, reduce the mobility of the ink composition and/or the primer, and/or increase the melting temperature of the ink composition. Crosslinking of the primer resin of the primer, crosslinking of the thermoplastic resin of the ink composition and/or crosslinking of the primer resin of the primer to the thermoplastic resin of the ink composition may improve the mechanical durability and chemical resistance of the printed flexible packaging material.

The cross-linker may be any cross-linker suitable to crosslink the thermoplastic resin of the ink composition and to crosslink the primer resin of the primer.
In some examples, the cross-linker may crosslink the thermoplastic resin within the ink composition, crosslink the thermoplastic resin of the ink composition with the primer resin of the primer and crosslink the primer resin within the primer.
In some examples, the cross-linking composition comprises a cross-linker which is reactive towards a carboxylic functional group, an amine functional group, a polyol functional group, or a combination thereof.
In some examples, the cross-linking composition comprises a cross-linker which is reactive towards a carboxylic functional group and/or an amine functional group.

In some examples, the cross-linker may cross-link the thermoplastic resin within the ink composition and cross-link the primer resin within the primer.

In some examples, the cross-linker may cross-link the thermoplastic resin within the ink composition, cross-link the thermoplastic resin of the ink composition with the primer resin of the primer and cross-link the primer resin within the primer.

For example, when the thermoplastic resin and/or the primer resin comprises a carboxylic functional group the cross-linker may comprise an epoxide, an aziridine, an organic metallic complex or ion, an organosilane, an epoxy organosilane, a carbodiimide, an isocyanate or an acetyl acetonate.

For example, when the thermoplastic resin and/or the primer resin comprises an amine functional group, the cross-linker may comprise an epoxide, an aziridine, an isocyanate, a maleic anhydride, an isocyanate alkyl organosilane, an epoxy organosilane, a carbodiimide, an aldehyde, a ketone, an acetyl acetonate, an isothiocyanate, an acyl azide, an NHS ester, a sulfonyl chlorides glyoxal, a carbonate, an aryl halide or an imidoester.

In some examples, when the thermoplastic resin comprises a polymer having acid side groups and the primer resin comprises an amine functional group (e.g. polyethylene imine), the cross-linker may be selected from an epoxy-based cross-linker, an aziridine-based cross-linker, an isocyanate-based cross-linker or a carbodiimde-based cross-linker. In some examples, when the thermoplastic resin comprises a polymer having acid side groups and the primer resin comprises an amine functional group (e.g. polyethylene imine), the cross-linker may be an epoxy-based cross-linker.

In some examples, the cross-linking composition comprises a cross-linker selected from an epoxide, an aziridine, an isocyanate, a maleic anhydride, an organic metallic complex or ion, an organosilane, an epoxy organosilane, a carbodiimide, an aldehyde, a ketone, an acetyl acetonate or combinations thereof. For example, the cross-linking composition may comprise an epoxide, an aziridine, an isocyanate, a maleic anhydride, an organic metallic complex or ion, an organosilane, an epoxy organosilane, a carbodiimide, an aldehyde, a ketone, an acetyl acetonate or combinations thereof.

In some examples, the cross-linking composition comprises a cross-linker selected from an epoxide, an aziridine, an isocyanate and a carbodiimide. For example, the cross-linking composition may comprise an epoxide, an aziridine, an isocyanate, or a carbodiimide.

In some examples, the cross-linking composition comprises a cross-linker selected from an epoxide, an aziridine, and a carbodiimide. For example, the cross-linking composition may comprise an epoxide, an aziridine, or a carbodiimide.

In some examples the cross-linking composition comprises an epoxide as the cross-linker.

In some examples, the cross-linking composition comprises a cross-linker in an amount greater than about 0.01 wt.% by total weight of the cross-linking composition, in some examples greater than about 0.1 wt.%, in some examples greater than about 0.5 wt.%, in some examples greater than about 1 wt.%, in some examples greater than about 1.5 wt.%, in some examples greater than about 2 wt.%, in some examples greater than about 2.5 wt.%, in some examples greater than about 3 wt.%, in some examples about 4 wt.% or greater, in some examples about 5 wt.% or greater, in some examples about 5 wt.%.

In some examples, the cross-linking composition comprises a cross-linker in an amount up to about 20 wt.% by total weight of the cross-linking composition, in some examples up to about 15 wt.%, in some examples up to about 10wt.%. The remaining wt.% of the cross-linking composition may be a carrier solvent as described below.

In some examples, the cross-linking composition comprises a cross-linker in an amount within the range of about 0.5 wt.% to about 10 wt.% by total weight of the cross-linking composition.

In some examples the cross-linking composition comprises a carrier solvent in which the cross-linker may be dissolved or dispersed. In some examples, the carrier solvent is selected from water, ethyl acetate, ethanol, methyl ethyl ketone, acetone, isopropanol and combinations thereof.

In some examples, the cross-linking composition comprises a carrier solvent present in an amount of about 80 wt.% or more by total weight of the cross-linking composition, in some examples about 85 wt.% or more, in some examples about 90 wt.% or more, in some examples about 95 wt.%.

In some examples, the cross-linking composition comprises a carrier solvent present in an amount up to about 99.99 wt.%, in some examples up to about 99.95 wt.%, in some examples up to about 99.5 wt.%, in some examples up to about 99 wt.%, in some examples up to about 98.5 wt.%, in some examples up to about 98 wt.%, in some examples up to about 97 wt.%, in some examples up to about 96 wt.%, in some examples up to about 95 wt.%, in some examples up to about 90 wt.%, in some examples up to about 85 wt.%, in some examples up to about 80 wt.%.
In some examples, the cross-linking composition comprises a carrier solvent present in an amount in the range of about 80 wt.% to about 99.99 Wt.%.

In some examples, the cross-linking composition comprises:
a cross-linker in an amount within the range of about 0.5 wt.% to about 10 wt.% by total weight of the cross-linking composition; and
a carrier solvent in an amount within the range of about 90 wt.% to about 99.5wt.%.

In some examples, the cross-linking composition may comprise a photo-initiator.

The cross-linker may comprise a group selected from epoxy, azriridine, isocyanate, maleic anhydride, anhydride, organosilane, epoxy oganosilane, carbodiimide, aldehyde, ketone, acetyl acetonate, organic metallic complexes or ions, or a combination thereof.

In some examples, cross-linker may be an epoxy-based cross-linker, azriridine-based cross-linker, isocyanate-based cross-linker, maleic anhydride-based cross-linker, anhydride-based cross-linker, organosilane-based cross-linker, epoxyoganosilane-based cross-linker, carbodiimide-based cross-linker, aldehyde-based cross-linker, ketone-based cross-linker, acetyl acetonate-based cross-linker as described below.

In some examples, the cross-linker has a molecular weight of more than 5000 Daltons. In some examples, the cross-linker has a 20 molecular weight of 5000 Daltons or less, in some examples 4000 Daltons or less, in some examples, 3000 Daltons or less, in some examples 1500 Daltons or less, in some examples a molecular weight of 1000 Daltons or less, in some examples a molecular weight of 700 Daltons or less, in some examples a molecular weight of 600 Daltons or less. In some examples, the cross-linker has a molecular weight of 25 from 100 to 1500 Daltons, in some examples, in some examples a molecular weight of from 100 to 600 Daltons.

In some examples, the cross-linker comprises a group selected from epoxy, aziridine, isocyanate or carbodiimide.

In some examples, the cross-linker comprises a polyepoxide, a polyaziridine, a polyisocyanate or a polycarbodiimide.

In some examples, the cross-linker is an epoxy-based cross-linker, for example a polyepoxide. The term 'polyepoxide' is used herein to refer to a molecule comprising at least two epoxy groups, e.g. of the formula -CH(O)CR¹H, wherein R¹ is selected from H and alkyl, in some examples wherein R¹ is H.

In some examples, the epoxy-based cross-linker is of the formula (I).

(X)-(Y-[Z-F]ₘ)ₙ

wherein, in each (Y-[Z-F]ₘ), Y, Z and F are each independently selected, such that
F is an epoxy group, e.g. of the formula -CH(O)CR¹H, wherein R¹ is selected from H and alkyl;
Z is alkylene,
Y is selected from (i) a single bond, -O-, -C(=O)-O-, -O-C(=O)- wherein m is 1 or (ii) Y is NH₂₋ₘ wherein m is 1 or 2,
n is at least 1, in some example at least 2, in some examples 2-4,
and X is an organic group.

In some examples, the cross-linker of formula (I) has at least two F groups.

In some examples, F is an epoxide of the formula -CH(O)CR¹H in which R¹ is H
X may comprise or be an organic group selected from optionally substituted alkylene, optionally substituted alkyl, optionally substituted aryl, optionally substituted arylalkyl, optionally substituted alkylaryl, isocyanurate, and a polysiloxane. X may comprise a polymeric component; in some examples the polymeric components may be selected from a polysilane, polysiloxane (such as poly(dimethyl siloxane), a polyalkylene (such as polyethylene or polypropylene), an acrylate (such as methyl acrylate) and a poly(alkylene glycol) (such as poly(ethylene glycol) and poly(propylene glycol)), and combinations thereof. In some examples X comprises a polymeric backbone, comprising a plurality of repeating units, each of which is covalently bonded to (Y-[Z-F]ₘ), with Y, Z, F and m as described herein. X may be selected from a group selected from a branched or straight-chain C₁₋₅ alkyl (e.g. methyl), phenyl, methylene bisphenyl, trisphenylmethane, cyclohexane, isocyanurate.

In some examples, Y is selected from a single bond, -O-, -C(=O)-O-, -O-C(=O)-, m is 1, and X is an organic group selected from alkylene (e.g. C₁₋₆alkylene), optionally substituted alkylene (e.g. C₁₋₆ alkylene), aryl (e.g. C₅₋₁₂ aryl), optionally substituted aryl (e.g. C₅₋₁₂ aryl), arylalkyl (e.g. C₆₋₂₀ arylalkyl), optionally substituted arylalkyl (e.g. C₆₋₂₀ arylalkyl), alkylaryl (e.g. C₆₋₂₀ alkylaryl) and optionally substituted alkylaryl (e.g. C₆₋₂₀ alkylaryl). In some examples, Y is selected from a single bond, -O-, -C(=O)-O-, -O-C(=O)-, m is 1, and X is an organic group selected from alkylene, aryl, arylalkyl, and alkylaryl. In some examples, Y is selected from a single bond, -O-, -C(=O)-O-, -O-C(=O)-, m is 1, and X is an organic group selected from C₁₋₆ alkylene, C₅₋₁₂ aryl, C₆₋₂₀ arylalkyl, and C₆₋₂₀ alkylaryl. In some examples, Y is selected from a single bond, -O-, -C(=O)-O-, -O-C(=O)-, m is 1, and X is an organic group selected from C₁₋₆ alkylene (e.g. methylene), phenyl, methylene bisphenyl, trisphenylmethane, cyclohexane.

In some examples, X is selected from (i) an alkane, which may be an optionally substituted straight chain, branched or cyclo-alkane, (ii) a cyclo alkane having at least two substituents that are Y-[Z-F]ₘ and (iii) an aryl (such as phenyl). In some examples, X is selected from (i) a branched alkane, with at least at least two of the alkyl branches covalently bonded to (Y-[Z-F]ₘ) and (ii) a cyclo alkane having at least two substituents that are Y-[Z-F]ₘ and (iii) an aryl (such as phenyl) having at least two substituents that are Y-[Z-F]ₘ; Y is selected from (i) -O-, -C(=O)-O-, -O-C(=O)- and m is 1 or (ii) Y is -NH₂₋ₘ, wherein m is 1 or 2; Z is C₁₋₄ alkylene; F is an epoxide of the formula -CH(O)CR¹H, wherein R¹ is selected from H and methyl, and in some examples F is an epoxide of the formula -CH(O)CR¹H in which R¹ is H.

In some examples, Z-F is an epoxycycloalkyl group. In some examples, Z-F is an epoxycyclohexyl group. In some examples, Z-F is an epoxycyclohexyl group, in some examples a 3,4 epoxycyclohexyl group. In some examples, the cross-linker comprises two epoxycycloalkyl groups, in some examples two epoxycyclohexyl groups.

In some examples, the cross-linker comprises two epoxycycloalkyl groups, which are bonded to one another via a linker species; and the linker species may be selected from a single bond, optionally substituted alkyl, optionally substituted aryl, optionally substituted arylalkyl, optionally substituted alkylaryl, isocyanurate, a polysiloxane, -O-, -C(=O)-O-, -O-C(=O)-, and amino and combinations thereof. In some examples, the linker species may be selected from alkylene, -O-, -C(=O)-O- and -O-C(=O)-. In some examples, the linker species may be selected from -C(=O)-O- and -O-C(=O)-.

In some examples the epoxy-based cross-linker is selected from the DECH family of epoxy-based cross-linkers (including 3,4-Epoxycyclohexylmethyl 3,4-epoxycyclohexanecarboxylate and 7-oxabicyclo[4.1.0]hept-3-ylmethyl 7-oxabicyclo[4.1.0]heptane-3-carboxylate) and tris(4-hydroxyphenyl)methane triglycidyl ether. In some examples the epoxy-based cross-linker is selected from 3,4-Epoxycyclohexylmethyl 3,4-epoxycyclohexanecarboxylate and 7-oxabicyclo[4.1.0]hept-3-ylmethyl 7-oxabicyclo[4.1.0]heptane-3-carboxylate, in some examples 7-oxabicyclo[4.1.0]hept-3-ylmethyl 7-oxabicyclo[4.1.0]heptane-3-carboxylate.

In some examples, the cross-linker is an aziridine-based cross-linker, for example a polyaziridine. The term 'polyaziridine' is used herein to refer to a molecule comprising at least two aziridine groups, e.g. of the formula -N(CH₂CR²H), wherein R² is selected from H and alkyl (e.g. methyl), in some examples wherein R² is methyl.

In some examples, the aziridine -based cross-linker is of the formula (II).

(S)-(T-[W-V]ᵢ)ₖ

wherein, in each (T-[W-V]ᵢ), T, W and V are each independently selected, such that
V is an aziridine group, e.g. of the formula -N(CH₂CR²H), wherein R² is selected from H and alkyl;
W is alkylene,
T is selected from a single bond, -O-, -C(=O)-O-, -O-C(=O)- and i is 1 or (ii) Y is NH₂₋ᵢ. wherein i is 1 or 2,
k is at least 1, in some example at least 2, in some examples at least 3, in some examples 1-4, in some examples 2-4,
and S is an organic group.

In some examples, the cross-linker of formula (II) has at least two V groups, in some examples at least three V groups.

In some examples, V is an aziridine of the formula -N(CH₂CR²H) in which R² is alkyl, in some examples R² is methyl.

S may comprise or be an organic group selected from optionally substituted alkylene, optionally substituted alkyl, optionally substituted aryl, optionally substituted arylalkyl, optionally substituted alkylaryl, isocyanurate, and a polysiloxane. S may comprise a polymeric component; in some examples the polymeric components may be selected from a polysiloxane (such as poly(dimethyl siloxane), a polyalkylene (such as polyethylene or polypropylene), an acrylate (such as methyl acrylate) and a poly(alkylene glycol) (such as poly(ethylene glycol) and poly(propylene glycol)), and combinations thereof. In some examples S comprises a polymeric backbone, comprising a plurality of repeating units, each of which is covalently bonded to (T-[W-V]ᵢ), with T, W, V and i as described herein. S may be selected from a group selected from a branched or straight-chain C₁₋₁₂ alkyl (e.g. C₁₋₆).

In some examples, S is a branched-chain alkyl (e.g. trimethyl propane) in which each of the alkyl branch groups (e.g. each of the methyl groups when S is trimethyl propane) are substituted with a (T-[W-V]ᵢ) group (i.e. k is 3 when S is trimethyl propane), in which T is selected from -O-, -C(=O)-O-, -O-C(=O)-, in some examples -O-C(=O)-; i is 1; W is C₁₋₄ alkylene, in some examples methylene (-CH₂-) or ethylene (-CH2-CH2-), in some examples ethylene; and V is an aziridine group of the formula -N(CH₂CR²H) in which R² is alkyl, in some examples ,methyl.

In some examples the aziridine-based cross-linker is trimethylolpropane tris(2-methyl-1-azridinepropionate) (XAMA®-2).

In some examples, the cross-linker is an isocyanate-based cross-linker, for example a polyisocyanate. The term 'polyisocyanate' is used herein to refer to a molecule comprising at least two isocyanate groups, e.g. of the formula -NCO.

In some examples, the isocyanate based cross-linker is selected from polymethylene diphenyl isocyanates, biuret, hexamethylene diisocyanate trimer (trimer of HDI), uretdion dimer (Alipa), blocked isocyanates (Cytec, Bayer, Alipa) and aliphatic polyisocyanates.

In some examples, the isocyanate based cross-linker is selected from polymethylene diphenyl isocyanates (e.g. Papi27 (Dow), Desmodur44V20 (Bayer), Suprasec5024 (Huntsman)), biuret, hexamethylene diisocyanate trimer (trimer of HDI), uretdion dimer (Alipa), blocked isocyanates (Cytec, Bayer, Alipa), aliphatic polyisocyanates, tolylene diisocyanate, diphenylmethane diisocyanate, naphthalene diisocyanate, xylylene diisocyanate, hydrogenated xylylene diisocyanate, hexamethylene diisocyanate, trimethylhexamethylene diisocyanate, isophorone diisocyanate, methylene-bis(4-cyclohexyl isocyanate), 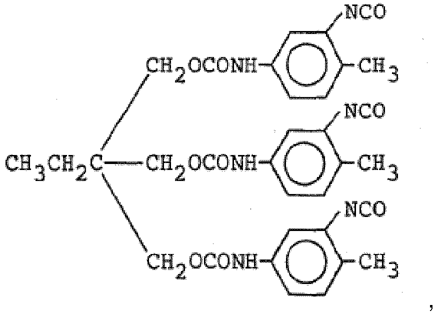 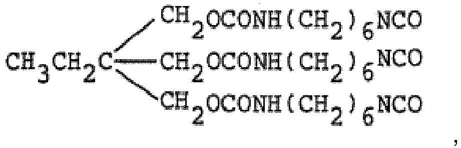 and

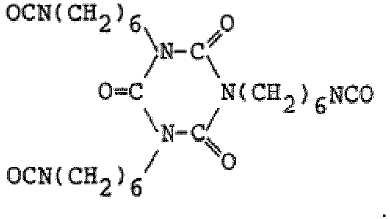

In some examples, the cross-linker is a carbodiimide-based cross-linker, for example a polycarbodiimide. The term 'polycarbodiimide' is used herein to refer to a molecule comprising at least two carbodiimide groups, e.g. of the formula -NCN-.

In some examples, the carbodiimide based cross-linker is SV-02 Carbodilite.

In some examples, the cross-linker is selected from organic metallic complexes or ions, for examples ionomers and Zn²⁺, Ca²⁺ containing compounds.

In some examples, the cross-linker comprises a maleic anhydride, e.g. the cross-linker may be a maleic anhydride-based cross-linker. In some examples, the cross-linker is a polymaleic anhydride.

In some examples, the maleic anhydride-based cross-linker is of formula (III), 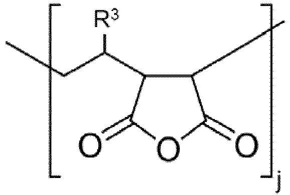 where R³ is H or alkyl and j is greater than 1.

In some examples, j is greater than 10, in some examples greater than 100.

In some examples, R³ is H or C₁₋₂₀ alkyl (e.g. C₁₆ alkyl).

In some examples, the maleic anhydride-based cross-linker is polymaleic anhydride 1-octadecene (available from Polyscience), poly(ethylene-alt-maleic anhydride) (available from Sigma).

In some examples, the cross-linker comprise an anhydride. In some examples, the cross-linker is an anhydride based cross-linker, e.g. a cross-linker comprising the group -C(O)OC(O)-.

In some examples, the anhydride based cross-linker is a cyclic anhydride, in some examples a cyclic anhydride of formula (IV)

R⁴C(O)OC(O)R⁵

where R⁴ and R⁵ are linked to form an optionally substituted ring.

In some examples, the anhydride based cross-linker is glutaric anhydride or phtalic anhydride.

In some examples, the cross-linker comprises a polyanhydride, for example polyacrylic anhydride or polymethacrylic anhydride.

In some examples, the cross-linker comprises an aldehyde. In some examples, the cross-linker is an aldehyde-based cross-linker, for example a polyaldehyde. The term 'polyaldehyde' is used herein to refer to a molecule comprising at least two aldehyde groups, e.g. of the formula -C(O)H.

In some examples, the cross-linker comprises a ketone. In some examples, the cross-linker is a ketone-based cross-linker, for example a polyketone. The term 'polyketone' is used herein to refer to a molecule comprising at least two ketone groups.

In some examples, the cross-linker comprises an acetyl acetonate. In some examples, the cross-linker is an acetyl acetonate based cross-linker, for example Acetoacetoxyethyl Methacrylate (Eastman™ AAEM).

In some examples, the cross-linker comprises an organosilane, for example a cross-linker comprising a silane group. In some examples, the organosilane may be of the formula R'Si(R⁶)(R⁷)(R⁸) wherein R⁶, R⁷ and R⁸ are independently selected from optionally substituted alkoxy, optionally substituted alkyl and optionally substituted aryl; and R' is selected from optionally substituted alkoxy, optionally substituted alkyl (e.g. aminoalkyl) and optionally substituted aryl. In some examples, R⁶, R⁷ and R⁸ are all alkyl, e.g. methyl. In some exmaples, R' is optionally substituted alkyl, e.g. amino substituted alkyl (e.g. C₁₋₁₂ aminoalkyl), or isocyanate substituted alkyl. In some examples, R' is C₁₋₆ aminoalkyl (e.g. aminopropyl).

In some examples, the cross-linker comprises trimethylaminopropylsilane.

In some examples, the cross-linker comprises an epoxyorganosilane, for example a cross-linker comprising a silane group (e.g. a group of formula -Si(R⁶)(R⁷)(R⁸) as described above) and an epoxy group as described above.

In some examples, the cross-linker comprises an epoxyorganosilane selected from epoxypropyltrimetoxysilane and oligomeric polyepoxysilane.

### Second Flexible Substrate

The second flexible substrate of the flexible packaging material may also be referred to as a functional substrate or simply a base layer. The base layer of the flexible packaging material may be the innermost layer of the flexible packaging material in use, and may thus be in contact with the packaged goods. In some examples the base layer is referred to as a functional substrate and is functional in the sense that it provides a barrier function to protect the packaged goods. The base layer or functional substrate may serve as a barrier to any external influence that could damage or otherwise reduce the quality of the packaged goods, in particular food, by preventing ingress of, for example, moisture, oxygen, other oxidants and pathogens such as viruses and bacteria.

In some examples, the second flexible substrate comprises a film or sheet, e.g. a thin film or thin sheet, of paper, metallic foil, and/or a plastic material. In some examples, the second flexible substrate comprises a metallic foil or a metallized substrate. In some examples, the second flexible substrate comprises a metallized paper or a metallized plastic film. In some examples, the second flexible substrate comprises an aluminium foil. In some examples the second flexible substrate comprises a film, e.g. a thin film, of a plastic material, for example, polyethylene (PE), linear low density polyethylene (LLDPE), low density polyethylene (LDPE), medium density polyethylene (MDPE), high density polyethylene (HDPE) polypropylene (PP), cast (cPP) or axially oriented polypropylene (BOPP), oriented polyamide (OPA). In some examples, the second flexible substrate comprises a plurality of layers of film of a plastic material, such as a combination of films selected from PE, LLDPE, PP, BOPP and OPA, laminated together.

In some examples, the second flexible substrate comprises a metallized paper in the form of a paper substrate coated on one surface with a layer of metal, for example aluminium.

In some examples, the second flexible substrate comprises a metallized plastic film in the form of a polymer substrate coated on one surface with a layer of metal, for example aluminium. In some examples, the second flexible substrate comprises a metallized plastic film in the form of a metallized BOPP film or a metallized PET film.

In some examples, the second flexible substrate comprises a thin film of material, wherein the film is less than 100 µm in thickness, for example less than 90 µm in thickness, less than 80 µm in thickness, less than 70 µm in thickness, less than 60 µm in thickness, less than 50 µm in thickness, less than 40 µm in thickness, less than 30 µm in thickness, less than 20 µm in thickness, less than 15 µm in thickness. In some examples, the film of material is about 12 µm in thickness.

In some examples, the second flexible substrate comprises a thin film of material, wherein the film is greater than 12 µm in thickness, for example greater than 15 µm in thickness, greater than 20 µm in thickness, greater than 30 µm in thickness, greater than 40 µm in thickness, greater than 50 µm in thickness, greater than 60 µm in thickness, greater than 70 µm in thickness, greater than 80 µm in thickness, greater than 90 µm in thickness. In some examples, the film of material is about 100 µm in thickness.

In some examples, the flexible packaging material comprises a sealant layer disposed on a surface of the second flexible substrate other than a surface of the second flexible substrate to which the first flexible substrate printed with the ink composition is laminated. In some examples, the second flexible substrate has a first surface on which the ink composition is printed and a second surface on which a sealant layer may be disposed. The second surface being a surface other than the surface on which the ink composition is printed, for example, the second surface of the second flexible substrate may be a surface opposing the first surface of the second flexible substrate. In some examples, the sealant layer is disposed on the innermost surface of the flexible packaging material and serves to provide means for sealing the flexible packaging material to itself or another material, with the goods to be packaged inside. In some examples the sealant layer comprises a film of low-melting, i.e. heat sealable, thermoplastic material. Suitable thermoplastic materials include those described herein in connection with the polymer resin (the polymer resin described herein being an example of a thermoplastic resin of an ink composition when the ink composition is an electrostatic ink composition) and include polymers of ethylene, or DuPont's SURLYN® ionomers. In some examples, the sealant layer comprises an extrudable material.

In some examples, the sealant layer comprises a thin film of a polymer, wherein the film is less than 100 µm in thickness, for example less than 90 µm in thickness, less than 80 µm in thickness, less than 70 µm in thickness, less than 60 µm in thickness, less than 50 µm in thickness, less than 40 µm in thickness, less than 30 µm in thickness, less than 20 µm in thickness, less than 15 µm in thickness. In some examples, the film of polymer is about 12 µm in thickness.

In some examples, the sealant layer comprises a thin film of a polymer, wherein the film is greater than 12 µm in thickness, for example greater than 15 µm in thickness, greater than 20 µm in thickness, greater than 30 µm in thickness, greater than 40 µm in thickness, greater than 50 µm in thickness, greater than 60 µm in thickness, greater than 70 µm in thickness, greater than 80 µm in thickness, greater than 90 µm in thickness. In some examples, the film of polymer is about 100 µm in thickness.

### Process for preparing the flexible packaging material

Described herein is a process for preparing a flexible packaging material comprising:
providing a first flexible substrate;
printing an ink composition comprising a thermoplastic resin onto the first flexible substrate;
depositing a cross-linking composition comprising a cross-linker onto the printed ink composition disposed on the first flexible substrate such that the thermoplastic resin of the ink composition is crosslinked; and
laminating the first flexible substrate with a second flexible substrate such that the printed ink composition and the cross-linker are disposed between the first and second flexible wherein the first flexible substrate comprises a primer comprising a primer resin on a surface onto which the ink composition is printed and depositing the cross-linking composition comprising the cross-linker onto the printed ink composition crosslinks the primer resin of the primer.

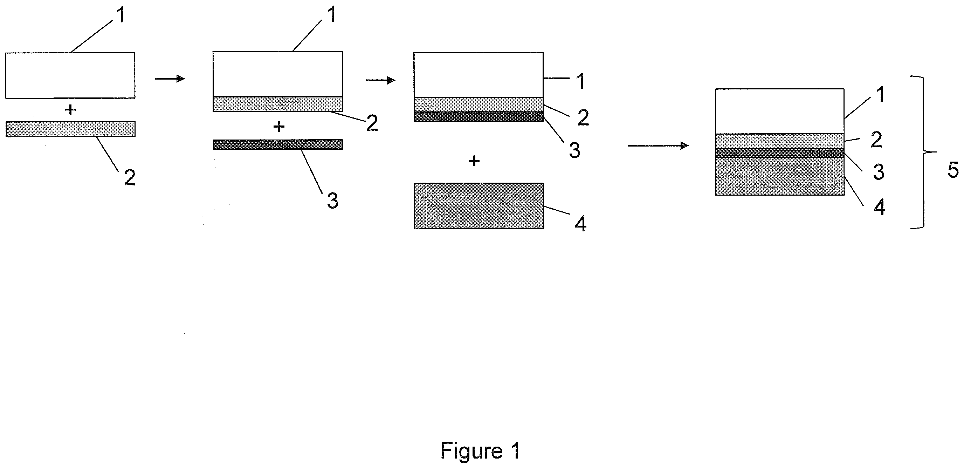

The processes described herein is depicted generally in Figure 1, in which the following reference numerals are used to identify the features indicated: reference numeral "1" denotes a first flexible substrate; reference numeral "2" denotes an ink composition; reference numeral "3" denotes a cross-linking composition; reference numeral "4" denotes a second flexible substrate; reference numeral "5" denotes a flexible packaging material.
Figure 1 depicts a process in which a first flexible substrate 1 is provided and an ink composition 2 is printed on to the first flexible substrate 1. A cross-linking composition 3 comprising a cross-linker for cross-linking the thermoplastic resin of the ink composition is then deposited onto the printed ink composition 2, e.g. printed ink layer 2, disposed on the first flexible substrate 1. A second flexible substrate 4 is then provided. The first flexible substrate 1 having printed ink layer 2 and the cross-linking composition 3 disposed thereon is then laminated with the second flexible substrate 4 such that the ink composition 2 and the cross-linking composition 3 are disposed between the first and second flexible substrates.
In some examples, printing an ink composition onto the first flexible substrate 1 may comprise printing any ink composition described herein on the first flexible by any suitable printing process.

The first flexible substrate is provided with a primer on a surface onto which the ink composition is printed.

A primer comprising a primer resin is provided on the first flexible substrate. In some examples the primer is provided in an amount such that the coat weight of the primer resin measured over the area of the first surface of the first flexible substrate is at least 0.01 g/m², in some examples at least 0.05 g/m², in some examples at least 0.1 g/m², in some examples at least 0.15 g/m², in some examples about 0.18 g/m². In some examples the primer is provided in an amount such that the coat weight of the primer resin measured over the area of the first surface of the first flexible substrate is up to about 0.5 g/m², in some examples up to about 0.2 g/m², in some examples up to about 0.5 g/m², in some examples up to about 1 g/m², in some examples up to about 1.5 g/m².

In some examples, printing an ink composition onto the first flexible substrate comprises printing an electrostatic ink composition, e.g. a liquid electrophotographic ink composition, onto the first flexible substrate in an electrophotographic or electrostatic printing process using an electrophotographic or electrostatic printing apparatus. Examples of suitable electrophotographic or electrostatic printing equipment are the HP Indigo digital presses. In some examples, the process may comprise electrophotographically printing a liquid electrophotographic ink composition onto the first flexible substrate.

In some examples, an ink composition comprising a thermoplastic resin is printed on the first flexible substrate in an amount such that the coat weight of the thermoplastic resin measured over the area of the first surface of the first flexible substrate is at least 0.01 g/m², in some examples at least 0.05 g/m², in some examples at least 0.1 g/m², in some examples at least 0.5 g/m², in some examples about 1 g/m². In some examples the ink composition is printed in an amount such that a coat weight of the thermoplastic resin measured over the area of the first surface of the first flexible substrate of up to about 16 g/m², in some examples up to about 10 g/m², in some examples up to about 5 g/m², in some examples up to about 4 g/m².

In some examples, the cross-linking composition may be applied to the printed ink composition disposed on the first flexible substrate using any suitable coating process. In some examples, the cross-linking composition is deposited onto the printed ink composition using a flexo coating, gravure, offset, or screen printing process. In some examples, the cross-linking composition is applied onto the printed ink composition using a printing machine, In some examples, the cross-linking composition is applied onto the printed ink composition using a laminator.

In examples in which the first substrate has a primer on a surface onto which the ink composition is printed, the cross-linking composition may be applied to the printed ink composition and primer on the first flexible substrate which may have been left exposed after printing of the ink composition onto the primer on a surface of the first flexible substrate.

In some examples, depositing the cross-linking composition on to the printed ink composition comprises depositing a cross-linking composition comprising a cross-linker for cross-linking the thermoplastic resin of the ink composition and a cross-linker for cross-linking the primer resin of the primer. In some examples, depositing the cross-linking composition on to the printed ink composition comprises depositing a cross-linking composition comprising a cross-linker for cross-linking the thermoplastic resin of the ink composition and for cross-linking the primer resin of the primer. In some examples, deposition the cross-linking composition on to the printed ink composition may comprise depositing a cross-linking composition for cross-linking the thermoplastic resin of the ink composition and depositing an additional cross-linking composition comprising a cross-linker for cross-linking the primer resin of the primer.

In some examples, the cross-linking composition is deposited on the printed ink composition disposed on the first flexible substrate in an amount such that the coat weight of the cross-linker measured over the area of the first surface of the first flexible substrate is at least 0.01 g/m², in some examples at least 0.02 g/m², in some examples at least 0.03 g/m², in some examples at least 0.04 g/m², in some examples at least 0.05 g/m², in some examples at least 0.06 g/m², in some examples at least 0.08 g/m², in some examples at least 0.1 g/m², in some examples at least 0.12 g/m², in some examples at least 0.15 g/m², in some examples at least 0.18 g/m², in some examples at least about 0.2 g/m², in some examples at least about 0.3 g/m², in some examples at least about 0.4 g/m², in some examples at least 0.5 g/m².

In some examples, the cross-linking composition is deposited on the printed ink composition disposed on the first flexible substrate in an amount such that the coat weight of the cross-linker measured over the area of the first surface of the first flexible substrate up to about 0.4 g/m², in some examples up to about 0.8 g/m², in some examples up to about 1 g/m².

In some examples, the cross-linking composition is deposited on the printed ink composition disposed on the first flexible substrate in an amount such that the coat weight of the cross-linker measured over the area of the first surface of the first flexible substrate is from about 0.04to about 0.8 g/m², in some examples from about 0.04 to about 0.4 g/m², in some examples from about 0.04 to about 0.2 g/m².

In some examples, the process of preparing a flexible packaging material further comprises activating the cross-linking composition after deposition of the cross-linking composition on the printed ink composition disposed on the first flexible substrate to form a crosslinked thermoplastic resin. In some examples, activation of the cross-linking composition results in the formation of a crosslinked thermoplastic resin and a crosslinked primer resin. In some examples, activation of the cross-linking composition results in the formation of a crosslinked thermoplastic resin, a crosslinked primer resin and crosslinking of the primer resin and the thermoplastic resin. In some examples, activation of the cross-linking composition may comprise heating the cross-linking composition. In some examples, activation of the cross-linking composition comprises heating the cross-linking composition to evaporate a cross-linking composition carrier solvent. In some examples, activation of the cross-linking composition comprises heating the cross-linking composition to a temperature of at least 50 ºC, in some examples at least 60 ºC, in some examples at least 70 ºC, in some examples at least 80 ºC, in some examples at least 90 ºC, in some examples at least 100 ºC, in some examples at least 110 ºC, in some examples at least 120 ºC, in some examples up to about 200 ºC.

In some examples, the crosslinking of the thermoplastic resin by the cross-linker and/or the crosslinking of the primer resin by the cross-linker is initiated and/or promoted by light (photoinitiation), such as ultraviolet light (UV photoinitiation); heat (thermal initiation); electron beam (e-beam initiation); ionising radiation, such as gamma radiation (gamma initiation); non-ionising radiation, such as microwave radiation (microwave initiation); or any combination thereof.

In some examples, the cross-linking composition is activated after deposition on the printed ink composition disposed on the first flexible substrate. In some examples, the cross-linking composition is activated prior to lamination of the first flexible substrate with the second flexible substrate. In some examples, the cross-linking composition is activated after lamination of the first flexible substrate with the second flexible substrate.

In some examples, laminating the first flexible substrate with a second flexible substrate comprises using an adhesive, for example a solvent-based adhesive, a solvent-less adhesive or a water based adhesive, to adhere the first and second flexible substrates. In some examples, the adhesive is a solvent based adhesive, for example a polyurethane or epoxy based adhesive. In some examples, the adhesive is a solvent-less adhesive, for example a polyurethane, or UV or electron beam curable adhesive. In some examples, the adhesive is a water-based adhesive, for example an adhesive comprising polyurethane or acrylic resins. In some examples, laminating the first flexible substrate with a second flexible substrate comprises applying an adhesive, for example a solvent-based adhesive, to a surface of the first flexible substrate printed with the ink composition and coated with a cross-linking composition, and then contacting the second flexible substrate with the adhesive disposed on the printed and cross-linking composition coated first flexible substrate. In some examples, laminating the first flexible substrate with a second flexible substrate comprises applying an adhesive, for example a solvent-based adhesive, to a first surface of the second flexible substrate and then contacting the first flexible substrate with the adhesive disposed on the second flexible substrate.

In some examples, lamination be carried out on any apparatus suited for performing such a task (e.g. LaboCombi from Nordmeccania). The laminating apparatus on which the lamination may be carried out may comprise nip rolls. Lamination carried out on the nip roll may be carried out at a pressure adhere the adhesive on the second flexible substrate with the ink-composition and cross-linking composition and/or primer disposed on the first flexible substrate and thereby create a bond between the materials.

In some examples, the pressure for lamination or the laminating nip may be less than about 10 bar, for example less than about 9 bar, for example less than about 8 bar, for example less than about 7 bar, for example less than about 6 bar, for example less than about 5 bar, for example less than about 4 bar, for example less than about 3 bar, for example about 2 bar.

In some examples, the pressure for lamination or the laminating nip may be greater than about 2 bar, for example greater than about 3 bar, for example greater than about 4 bar, for example greater than about 5 bar, for example greater than about 6 bar, for example greater than about 7 bar, for example greater than about 8 bar, for example greater than about 9 bar, for example about 10 bar.

In some examples, lamination is carried out at a temperature in the range of about 30ºC to 100°C.

In some examples, lamination is carried out at a temperature of at least about 30ºC, in some examples at least about 40 ºC, in some examples at least about 50 ºC, in some examples at least about 60 ºC.

In some examples, lamination is carried out at a temperature of up to about 100ºC. In some examples, lamination is carried out at a temperature of about 60 ºC.

In some examples, the second flexible substrate has a second surface on which a sealant layer is disposed. In some examples, the second surface is a surface of the second flexible substrate other than a surface of the second flexible substrate to which the first flexible substrate is laminated. In some examples, the sealant layer may be deposited on the second surface of the second flexible substrate before lamination of the first and second flexible substrates. In some examples, the sealant layer may be deposited on the second surface of the second flexible substrate after lamination of the first and second flexible substrates.

In some examples, providing a sealant layer on the second flexible substrate comprises depositing a sealant material to form a sealant layer on the second surface of the second flexible substrate. The material used to form the sealant layer may be as described previously. Deposition of the sealant material onto the second surface of the second flexible substrate may take place by any suitable process, for example, extrusion coating, flexo coating, gravure or screen printing. In some examples, the second flexible substrate and sealant layer are preformed as a functional substrate.

In some examples the process comprises:
providing a first flexible substrate comprising a primer on a surface of the first flexible substrate, the primer comprising a primer resin comprising an amine functional group;
printing an ink composition comprising a thermoplastic resin onto the primer on the surface of the first flexible substrate, the thermoplastic resin comprising a polymer having acidic side groups;
depositing a cross-linking composition comprising a cross-linker selected from an epoxy-based cross-linker, a aziridine-based cross-linker, an isocyanante-based cross-linker and a carbodiimide-based cross-linker onto the printed ink composition disposed on the primer on the surface of the first flexible substrate such that the thermoplastic resin of the ink composition is crosslinked, the primer resin of the primer is crosslinked and the thermoplastic resin of the ink composition is crosslinked with the primer resin of the primer; and
laminating the first flexible substrate with a second flexible substrate such that the primer, printed ink composition and the cross-linker are disposed between the first and second flexible substrates.

In some examples, the flexible packaging material may comprise:
a first flexible substrate comprising a primer on a surface of the first flexible substrate, the primer comprising a primer resin comprising an amine functional group;
a printed ink layer comprising a thermoplastic resin disposed on the first flexible substrate, the thermoplastic resin comprising a polymer having acidic side groups;
a cross-linker selected from an epoxy-based cross-linker, a aziridine-based cross-linker, an isocyanante-based cross-linker and a carbodiimide-based cross-linker applied to the printed ink layer such that the thermoplastic resin is crosslinked, the primer resin is crosslinked and the thermoplastic resin and the primer resin are crosslinked; and
a second flexible substrate laminated to the first flexible substrate such that the printed ink layer and the cross-linker are disposed between the first and second flexible substrates.

In some examples the process comprises:
providing a first flexible substrate comprising a primer on a surface of the first flexible substrate, the primer comprising a primer resin comprising an amine functional group;
printing an ink composition comprising a thermoplastic resin onto the primer on the surface of the first flexible substrate, the thermoplastic resin comprising a polymer having acidic side groups;
depositing a cross-linking composition comprising an epoxy-based cross-linker, a aziridine-based cross-linker onto the printed ink composition disposed on the primer on the surface of the first flexible substrate such that the thermoplastic resin of the ink composition is crosslinked, the primer resin of the primer is crosslinked and the thermoplastic resin of the ink composition is crosslinked with the primer resin of the primer; and
laminating the first flexible substrate with a second flexible substrate such that the primer, printed ink composition and the cross-linker are disposed between the first and second flexible substrates.

In some examples, the flexible packaging material may comprise:
a first flexible substrate comprising a primer on a surface of the first flexible substrate, the primer comprising a primer resin comprising an amine functional group;
a printed ink layer comprising a thermoplastic resin disposed on the first flexible substrate, the thermoplastic resin comprising a polymer having acidic side groups;
an epoxy-based cross-linker applied to the printed ink layer such that the thermoplastic resin is crosslinked, the primer resin is crosslinked and the thermoplastic resin and the primer resin are crosslinked; and
a second flexible substrate laminated to the first flexible substrate such that the printed ink layer and the cross-linker are disposed between the first and second flexible substrates.

### Examples

The following illustrates examples of the materials, methods and related aspects described herein. Thus, these examples should not be considered as restricting the present disclosure, but are merely in place to teach how to make examples of compositions of the present disclosure. As such, a representative number of compositions and their method of manufacture are disclosed herein.

### First flexible substrate having a primer on a surface to which an ink composition is printed.

### Example 1

A first flexible substrate comprising a primer on a surface of the first flexible substrate to which an ink composition was printed was prepared by providing a 12 µm PET (polyethylene terephthalate) film which was primed with DP050 (primer containing polyethylene imine as the primer resin, available from Michelman). The primer was applied such that the coat weight of polyethylene imine as the primer resin was 0.18 gsm.

An image was electrostatically printed using a HP Indigo WS6600 printing press and Electrolnk® 4.5 (available from HP Indigo), a liquid electrophotographic ink composition comprising a thermoplastic resin comprising ethylene acrylic acid, ethylene methacrylic acid copolymers) on the PET film, the image included white and non-printed areas, the printed areas having an ink coverage of 100-350% (1.0gsm-4.0gsm coat weight of the thermoplastic resin on the PET film).

The printed material was coated using a laboratory laminator (LaboCombi, Nordmeccanica) with a cross linking composition. The cross-linking composition applied was DECH - 3,4-Epoxycyclohexylmethyl (cross-linker for cross-linking the thermoplastic resin within the ink composition, the thermoplastic resin and the primer resin, and the primer resin of the primer) dissolved in ethyl acetate at a solid percentage by weight to ethyl acetate of 1%. The cross-linking composition was applied such that the coat weight of the cross-linker was 0.04 gsm.

The cross linker was activated during solvent evaporation by using the 3 ovens of the coater (the laminator - LaboCombi, Nordmeccanica) at 70 ºC,100 ºC and 120 ºC, speed of coating was 30m/min.

### Example 2

A first flexible substrate having a primer on a surface to which an ink composition is printed was prepared as for Example 1, except that the cross-linking composition applied was DECH - 3,4-Epoxycyclohexylmethyl (cross-linker for cross-linking the thermoplastic resin within the ink composition, the thermoplastic resin and the primer resin, and the primer resin of the primer) dissolved in ethyl acetate at a solid percentage by weight to ethyl acetate of 2.5%. The cross-linking composition was applied such that the coat weight of the cross-linker and the primer-component cross-linker was 0.10gsm.

### Example 3

A first flexible substrate having a primer on a surface to which an ink composition is printed was prepared as for Example 1, except that the cross-linking composition applied was DECH - 3,4-Epoxycyclohexylmethyl (cross-linker for cross-linking the thermoplastic resin within the ink composition, the thermoplastic resin and the primer resin, and the primer resin of the primer) dissolved in ethyl acetate at a solid percentage by weight to ethyl acetate of 5%. The cross-linking composition was applied such that the coat weight of the cross-linker and the primer-component cross-linker was 0.20 gsm.

### Comparative Example 1

A first flexible substrate having a primer on a surface to which an ink composition is printed was prepared as for Example 1, except that no cross-linking composition was applied.

### Test 1 - Peeling and Water Resistance

Samples of the first flexible substrates comprising a primer on a surface of the first flexible substrate to which an ink composition was printed were prepared according to Examples 1-3 and Comparative Example 1. Each sample was tested following Finat TM-21 in which each of the samples was immersed in water at 21°C and 60°C for 0.5 hour and 15 min respectively. Next the printed surface was dried with a cloth and immediately taped with a 1x12inch tape (3M 810), the tape was pressed with a 5Kg roller for 5 times and pulled from the print. The amount of ink left on the printed material is listed in Table 1 below.

Table 1 summarizes peeling and water resistance performance of increasing amounts of cross linker (1, 2.5, 5% DECH) compared with the reference (0% DECH).

**Table 1**

| | **Peeling and Water Resistivity** | |
|---|---|---|
| **First flexible substrate printed with ink composition** | **Peeling after immersion in water at 21 ºC, % of ink left on first flexible substrate.** | **Peeling after immersion in water at 60 ºC for 15 min, % of ink left on first flexible substrate.** |
| Example 1 | 100% | 80% |
| Example 2 | 100% | 80% |
| Example 3 | 100% | 100% |
| Comparative Example 1 | 10% | 10% |

Table 1 shows that cross-linking of the primer resin within the primer and cross-linking of the thermoplastic resin within the ink composition improves water resistivity and resistance to peeling. Table 1 also shows that increasing the amount of cross-linker in the cross-linking composition improves the water resistance. In particularly, it was found that increasing the concentration of the cross-linker in the cross-linking composition from 1% to 5% (increasing the coat weight of the cross-linker from 0.04 gsm to 0.2 gsm) resulted in a large improvement in water resistance of the printed first flexible substrate such that none of the ink composition was removed on peeling.

The improved water resistance of Examples 1-3 compared to Comparative Example 1 also suggests that the cross-linker of the cross-linking composition deposited on the printed ink composition penetrated to the primer below the printed ink composition to cause cross-linking of the primer resin.

The present inventors also prepared first flexible substrates as for Example 1 except that the cross-linking composition was deposited at a concentration and in an amount such that a coat weight of the cross-linker of 0.4 gsm and 0.8 gsm was obtained (the concentration of the cross-linking composition used was 10% and 20% respectively). When these samples were tested in the same way as Examples 1-3, no ink was peeled from the substrate under either set of conditions.

### Example 4

A flexible packaging material was prepared by laminating the printed first flexible substrate of Example 1 with a second flexible substrate (90 µm medium density polyethylene (MDPE)) comprising a sealant layer (SURLYN® (10 µm) - available from DuPont) on a surface other than the surface to which the first flexible substrate was laminated, lamination of the first and second flexible substrates was carried out by using a solvent based adhesive for high performance lamination (Polyurethane Morchem 246+90, 2.5gsm) and a laminator (LaboCombi from Nordmeccanica). Lamination of the first flexible substrate of Example 1 with the second flexible substrate was carried out using the LaboCombi laminator at a speed of 50m/min, corona 1000kW was applied to the first and second flexible substrates, the temperature of the 3 ovens of the laminator were 70 ºC, 90 ºC and 100 ºC, lamination was carried out with a nip temperature of 60º C and at a pressure of 4 bar.

### Example 5

A flexible packaging material was prepared as for Example 4 except that the printed first flexible substrate of Example 2 was used.

### Example 6

A flexible packaging material was prepared as for Example 4 except that the printed first flexible substrate of Example 3 was used.

### Comparative Example 2

A flexible packaging material was prepared as for Example 4 except that the printed first flexible substrate of Comparative Example 1 was used.

### Test 2 - Lamination Bond Strength

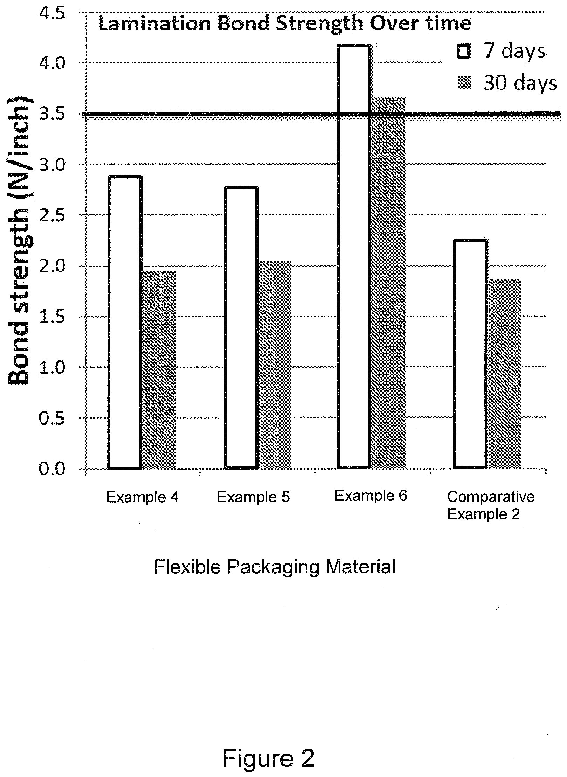

Lamination bond strength is a standard test to evaluate the performance of the laminate, (ASTM F0904-98R08). Here the bond strength were tested under stress conditions over a period of 30 days for printed material with high ink coverage including white (total 350%). Figure 2 is a graph showing lamination bond strength after 7 days and 30 days of laminates that their printed samples were previously treated with cross linker compared with the untreated reference. The graph shows that after treating the LEP and primer with a cross-linking composition comprising 5% cross-linker (coat weight 0.2 gsm), the value after 7 days increases substantially compared with untreated reference material. The high value is maintained over a period of 30 days above the value of 0.138 N/mm (3.5 N/inch) (accepted value for many high performance flexible packaging applications).

The present inventors also tested samples prepared in the same was as Examples 3-6 and Comparative Example 2 for which the second flexible substrate was instead a PET/OPA/cPP laminate. The same tendency of growing lamination bond strength for samples treated with a cross-linking composition compared with an untreated reference was also observed for this retort-able construction.

### Test 3 - Thermal Resistance. Sealing

A flexible package (10x15cm) was made from each of the materials produced according to Examples 4-6 and Comparative Example 2. In order to make a package from the flexible packaging material, the flexible packaging material was sealed using a hot sealer. Some ink compositions, for example LEP ink compositions, may be sensitive to sealing (the melting temperature of the thermoplastic resin in LEP ink is around 80°C) due to the high sealing temperature (ranging from 110-220°C at various time, depending on the application). Melting of ink compositions, for example LEP ink compositions, may cause movement of the printed ink composition which can lead to colour changes. Colour change in the printed image or information during or after heat sealing is unacceptable to most customers.

The present inventors conducted a stressful sealing test using a semi manual sealer (Brugger HSG-C) at 210°C for 1 sec at 600N for high ink coverage (350% with white). From table 2 it can be observed that the package produced from the material of Comparative Example 2 failed with many colour changes, while the cross-linked samples show minimal to no changes in the visual properties of the printed ink composition.

**Table 2**

| Material used to form package | Colour change observed following sealing test |
|---|---|
| Example 4 | Minimal colour change |
| Example 5 | No colour change |
| Example 6 | No colour change |
| Comparative Example 2 | many colour changes |

### Example 7

A flexible packaging material was produced as for Example 4 except that the coat weight of the primer resin of the primer on the first flexible substrate was 4.5 gsm and the second flexible substrate was PET(12 µm)/OPA(15 µm)/cPP(80 µm). The adhesive was allowed to cure.

### Example 8

A flexible packaging material was produced as for Example 5 except that the coat weight of the primer resin of the primer on the first flexible substrate was 4.5 gsm and the second flexible substrate was PET(12 µm)/OPA(15 µm)/cPP(80 µm). The adhesive was allowed to cure.

### Example 9

A flexible packaging material was produced as for Example 6 except that the coat weight of the primer resin of the primer on the first flexible substrate was 4.5 gsm and the second flexible substrate was PET(12 µm)/OPA(15 µm)/cPP(80 µm). The adhesive was allowed to cure.

### Comparative Example 3

A flexible packaging material was produced as for Comparative Example 2 except that the coat weight of the primer resin of the primer on the first flexible substrate was 4.5 gsm and the second flexible substrate was PET(12 µm)/OPA(15 µm)/cPP(80 µm). The adhesive was allowed to cure.

### Test 4 - Thermal Resistance - Retort Test:

Retort is one of the most complicated flexible packaging processes since the whole package is heated to elevated temperature with steam and then cooled back to room temperature under pressure. Retort cannot be met with some existing flexible packaging materials due to primers used having unsuitable water resistance and lamination bond strength values being insufficient.

The flexible packaging material was formed into 15x10 cm flexible packages with various ink coverage to be tested using an autoclave (Tuttnauer Elara 9i). In order to make a package from the flexible packaging material, the flexible packaging material was sealed using a hot sealer (Brugger HSG-C with a top jaw temperature 180 °C, bottom jaw temperature 150 ºC, 400N, 0.5 sec).

In this thermal retort test the flexible packages made from each of the flexible packaging material of Examples 7-9 and Comparative Example 3were filled with hot water (85°C) and directly placed in an autoclave. Next steam flows into the closed chamber, and the autoclave was gradually heated for 30min up to 121°C, with a process of air removal from the chamber. Afterwards the temperature remained at 121°C for 20min - the sterilization stage, and afterwards cooled slowly for 60 min, while pressure was gradually increased up to 3 bar in order to balance the package pressure during cooling. The cooling stage was stopped when the autoclave temperature reached 85°C, the pressure was stabilized to atmospheric pressure so the autoclave door could be opened. The packages were removed from the autoclave for inspection. This process was repeated for a second set of flexible packages to provide a second set of results (Test #2)

The first (Test #1) and second (Test #2) sets of results of this thermal retort test are shown in Table 3 below.

**Table 3**

| Material used to make package | Test #1 | Test #2 |
|---|---|---|
| Example 7 | Primer Ink failure | Primer Ink failure |
| Example 8 | Minor tunnelling | Primer ink failure |
| Example 9 | Minor tunnelling | Minor tunnelling |
| Comparative Example 3 | Primer ink failure | Primer ink failure |

Table 3 summarizes two tests that were conducted. The reference non-cross linked laminate failed the retort process between the ink and primer interface, as expected, because of the limited water resistance of the primer which dissolved when water steam penetrates into the package from the sealing area during the retort process. For the material produced by providing a cross-linking composition comprising 5% cross-linker (coat weight of cross-linker 0.2 gsm), the package successfully passed the retort test. Moreover, the bond strength of the package maintained high after retort high and only minor tunnelling damages in the package were observed.

### Example 10

A flexible packaging material was produced as for Example 9 except that the second flexible substrate was AI(8 µm)/OPA(15 µm)/cPP(80 µm).

### Comparative Example 4

A flexible packaging material was produced as for Comparative Example 3 except that the second flexible substrate was AI(8 µm)/OPA(15 µm)/cPP(80 µm).

A second retort test of higher temperature than the retort test described above was carried out on flexible packages made from the flexible packaging materials produced according to Example 10 and Comparative Example 4. In this second retort test, the test was carried out as for the first retort test described above except that the flexible packages were heated to 130°C over 30min. The tests were repeated for a second set of flexible packages (Test #2).

The results are provided in Table 4 below which also compares the results to the results of Test #1 and Test #2 for packages formed from the materials of Example 9 and Comparative Example 3.

**Table 4**

| Material used to make package | Test #1 | Test #2 |
|---|---|---|
| Example 9 | Minor tunnelling | Minor tunnelling |
| Comparative Example 3 | Primer ink failure | Primer ink failure |
| Example 10 | Minor tunnelling | Minor tunnelling |
| Comparative Example 4 | Primer ink failure | Primer ink failure |

For the materials produced by providing a cross-linking composition, the package passed successfully the retort test. Packages produced from materials lacking a cross-linking composition failed the retort tests.

Therefore, the present inventors have shown that the methods and products described herein are more successful than previous methods and products in providing flexible packages which enable the contents to be stored, for example under humid conditions, as well as undergo treatment for increasing the shelf-life of food products. The inventors have also found that the materials and packages produced do not show the same problems with discolouration on heating found in some existing materials and packaging, allowing very attractive and colourful products to be produced and the colours to be maintained through packaging and storage.

Without wishing to be bound by theory, it is thought that these improvements are due to the cross-linking composition causing: cross-linking between the thermoplastic resin of the ink composition to increase the melting point of the ink composition and increase cohesive strength within the ink composition which may in turn increase the lamination bond strength; cross-linking between the thermoplastic resin of the ink composition and the primer resin of the primer to reinforce the primer-ink interface to increase lamination bond strength; and/or cross-linking between the primer resin of the primer to improve water resistance of the primer.

## Claims

1. A process for preparing a flexible packaging material comprising:
providing a first flexible substrate;
printing an ink composition comprising a thermoplastic resin onto the first flexible substrate;
depositing a cross-linking composition comprising a cross-linker onto the printed ink composition such that the thermoplastic resin of the ink composition is crosslinked; and
laminating the first flexible substrate with a second flexible substrate such that the ink composition and the cross-linker are disposed between the first and second flexible substrates,
wherein the first flexible substrate comprises a primer comprising a primer resin on a surface onto which the ink composition is printed and depositing the cross-linking composition comprising the cross-linker onto the printed ink composition crosslinks the primer resin of the primer.

2. A process according to claim 1, wherein the primer resin comprises an amine functional group.

3. A process according to claim 1, wherein the cross-linker of the cross-linking composition crosslinks the thermoplastic resin of the ink-composition, crosslinks the primer resin of the primer, and crosslinks the thermoplastic resin with the primer resin.

4. A process according to claim 1, wherein the thermoplastic resin of the ink composition comprises alkylene acrylic or methacrylic acid resins, polyurethane resins, polyethylene imine resins, polyamide resins, polyvinyl alcohol or combinations thereof.

5. A process according to claim 1, wherein the thermoplastic resin comprises a polymer having acidic side groups.

6. A process according to claim 1, wherein the cross-linking composition comprises an epoxy-based cross-linker, an aziridine-based cross-linker, an isocyanate-based cross-linker or a carbodiimide-based cross-linker.

7. A process according to claim 1, wherein the primer resin comprises an amine functional group, the thermoplastic resin comprises a polymer having acidic side groups and the cross-linker is an epoxy-based cross-linker.

8. A process according to claim 1, wherein the cross-linking composition is provided in an amount such that the coat weight of the cross-linker deposited on the printed ink composition on the first flexible substrate is at least 0.05 gm⁻².

9. A process according to claim 1, wherein the second flexible substrate comprises a film or sheet of paper, metallic foil, and/or a plastic material.

10. A flexible packaging material comprising:
a first flexible substrate;
a printed ink layer comprising a thermoplastic resin disposed on the first flexible substrate;
a cross-linker applied to the printed ink layer such that the thermoplastic resin is crosslinked; and
a second flexible substrate laminated to the first flexible substrate such that the printed ink layer and the cross-linker are disposed between the first and second flexible substrates, wherein the first flexible substrate comprises a primer on a surface on which the printed ink composition is disposed, the cross-linker applied to the printed ink layer such that the primer resin is crosslinked.

11. A flexible packaging material according to claim 10, wherein the primer resin comprises an amine functional group, the thermoplastic resin comprises a polymer having acidic side groups and the cross-linker is an epoxy-based cross-linker.

12. A flexible packaging material according to claim 10 comprising a sealant layer disposed on a surface of the second flexible substrate other than a surface of the second flexible substrate to which the first flexible substrate printed with the ink composition is laminated.

13. A flexible package comprising:
a flexible packaging material comprising:
a first flexible substrate;
a printed ink layer comprising a thermoplastic resin disposed on the first flexible substrate;
a cross-linker applied to the printed ink layer such that the thermoplastic resin is crosslinked; and
a second flexible substrate laminated to the first flexible substrate such that the printed ink layer and the cross-linker is disposed between the first and second flexible substrates, wherein the first flexible substrate comprises a primer on a surface on which the printed ink composition is disposed, the cross-linker applied to the printed ink layer such that the primer resin is crosslinked.

## Patentansprüche

1. Prozess zum Herstellen eines flexiblen Verpackungsmaterials, Folgendes umfassend:
Bereitstellen eines ersten flexiblen Substrats;
Drucken einer Tintenzusammensetzung, umfassend ein thermoplastisches Harz, auf ein erstes flexibles Substrat;
Abscheiden einer Vernetzungszusammensetzung, welche ein Vernetzungsmittel umfasst, auf die gedruckte Tintenzusammensetzung, sodass das thermoplastische Harz der Tintenzusammensetzung vernetzt ist; und
Laminieren des ersten flexiblen Substrats mit einem zweiten flexiblen Substrat, sodass die Tintenzusammensetzung und das Vernetzungsmittel zwischen dem ersten und dem zweiten flexiblen Substrat angeordnet sind,
wobei das erste flexible Substrat einen Primer umfasst, welcher ein Primer-Harz auf einer Oberfläche umfasst, auf welcher die Tintenzusammensetzung gedruckt wird, und wobei das Abscheiden der das Vernetzungsmittel umfassende Vernetzungszusammensetzung auf die gedruckte Tintenzusammensetzung das Primer-Harz des Primers vernetzt.

2. Prozess nach Anspruch 1, wobei das Primer-Harz eine funktionelle Amingruppe umfasst.

3. Prozess nach Anspruch 1, wobei das Vernetzungsmittel der Vernetzungszusammensetzung das thermoplastische Harz der Tintenzusammensetzung vernetzt, das Primer-Harz des Primers vernetzt und das thermoplastische Harz mit dem Primer-Harz vernetzt.

4. Prozess nach Anspruch 1, wobei das thermoplastische Harz der Tintenzusammensetzung Alkylenacryl- oder Methacrylsäureharze, Polyurethanharze, Polyethyleniminharze, Polyamidharze, Polyvinylalkohol oder Kombinationen davon umfasst.

5. Prozess nach Anspruch 1, wobei das thermoplastische Harz ein Polymer mit sauren Seitengruppen umfasst.

6. Prozess nach Anspruch 1, wobei die Vernetzungszusammensetzung ein Vernetzungsmittel auf Epoxybasis, ein Vernetzungsmittel auf Aziridinbasis, ein Vernetzungsmittel auf Isocyanatbasis oder ein Vernetzungsmittel auf Carbodiimidbasis umfasst.

7. Prozess nach Anspruch 1, wobei das Primer-Harz eine funktionelle Amingruppe umfasst, das thermoplastische Harz ein Polymer mit sauren Seitengruppen umfasst und das Vernetzungsmittel ein Vernetzungsmittel auf Epoxybasis ist.

8. Prozess nach Anspruch 1, wobei die Vernetzungszusammensetzung in einer solchen Menge bereitgestellt wird, dass das Beschichtungsgewicht des Vernetzungsmittels, das auf der gedruckten Tintenzusammensetzung auf dem ersten flexiblen Substrat abgeschieden ist, mindestens 0,05 g/m⁻² beträgt.

9. Prozess nach Anspruch 1, wobei das zweite flexible Substrat einen Film oder ein Blatt Papier, eine Metallfolie und/oder ein Kunststoffmaterial umfasst.

10. Flexibles Verpackungsmaterial, Folgendes umfassend:
ein erstes flexibles Substrat;
eine gedruckte Tintenschicht, die ein thermoplastisches Harz umfasst, das auf dem ersten flexiblen Substrat angeordnet ist;
ein Vernetzungsmittel, das so auf die gedruckte Tintenschicht aufgebracht ist, dass das thermoplastische Harz vernetzt ist; und
ein zweites flexibles Substrat, das so auf das erste flexible Substrat laminiert ist, dass die gedruckte Tintenschicht und das Vernetzungsmittel zwischen dem ersten und dem zweiten flexiblen Substrat angeordnet sind, wobei das erste flexible Substrat einen Primer auf einer Oberfläche aufweist, auf der die gedruckte Tintenzusammensetzung angeordnet ist, wobei das Vernetzungsmittel auf die gedruckte Tintenschicht aufgebracht ist, so dass das Primer-Harz vernetzt ist.

11. Flexibles Verpackungsmaterial nach Anspruch 10, wobei das Primer-Harz eine funktionelle Amingruppe umfasst, das thermoplastische Harz ein Polymer mit sauren Seitengruppen umfasst und das Vernetzungsmittel ein Vernetzungsmittel auf Epoxybasis ist.

12. Flexibles Verpackungsmaterial nach Anspruch 10, umfassend eine Versiegelungsschicht, die auf einer Oberfläche des zweiten flexiblen Substrats außer einer Oberfläche des zweiten flexiblen Substrats angeordnet ist, auf die das mit der Tintenzusammensetzung bedruckte erste flexible Substrat laminiert ist.

13. Flexible Verpackung, Folgendes umfassend:
ein flexibles Verpackungsmaterial, Folgendes umfassend:
ein erstes flexibles Substrat;
eine gedruckte Tintenschicht, die ein thermoplastisches Harz umfasst, das auf dem ersten flexiblen Substrat angeordnet ist;
ein Vernetzungsmittel, das so auf die gedruckte Tintenschicht aufgebracht ist, dass das thermoplastische Harz vernetzt ist; und
ein zweites flexibles Substrat, das so auf das erste flexible Substrat laminiert ist, dass die gedruckte Tintenschicht und das Vernetzungsmittel zwischen dem ersten und dem zweiten flexiblen Substrat angeordnet sind, wobei das erste flexible Substrat einen Primer auf einer Oberfläche aufweist, auf der die gedruckte Tintenzusammensetzung angeordnet ist, wobei das Vernetzungsmittel auf die gedruckte Tintenschicht aufgebracht ist, so dass das Primer-Harz vernetzt ist.

## Revendications

1. Procédé de préparation d'un matériau d'emballage souple, comprenant :
la fourniture d'un premier substrat souple ;
l'impression d'une composition d'encre comprenant une résine thermoplastique sur le premier substrat souple ;
le dépôt d'une composition de réticulation comprenant un agent de réticulation sur la composition d'encre imprimée de sorte que la résine thermoplastique de la composition d'encre est réticulée ; et
la stratification du premier substrat souple avec un second substrat souple de sorte que la composition d'encre et l'agent de réticulation sont disposés entre les premier et second substrats souples,
le premier substrat souple comprenant un apprêt comprenant une résine d'apprêt sur une surface sur laquelle la composition d'encre est imprimée et le dépôt de la composition de réticulation comprenant l'agent de réticulation sur la composition d'encre imprimée réticulant la résine d'apprêt de l'apprêt.

2. Procédé selon la revendication 1, dans lequel la résine d'apprêt comprend un groupe fonctionnel amine.

3. Procédé selon la revendication 1, dans lequel l'agent de réticulation de la composition de réticulation réticule la résine thermoplastique de la composition d'encre, réticule la résine d'apprêt de l'apprêt, et réticule la résine thermoplastique avec la résine d'apprêt.

4. Procédé selon la revendication 1, dans lequel la résine thermoplastique de la composition d'encre comprend des résines d'acides acryliques ou méthacryliques d'alkylène, des résines de polyuréthanne, des résines d'imine de polyéthylène, des résines de polyamide, de l'alcool polyvinylique ou des combinaisons de ceux-ci.

5. Procédé selon la revendication 1, dans lequel la résine thermoplastique comprend un polymère ayant des groupes latéraux acides.

6. Procédé selon la revendication 1, dans lequel la composition de réticulation comprend un agent de réticulation à base d'époxy, un agent de réticulation à base d'aziridine, un agent de réticulation à base d'isocyanate ou un agent de réticulation à base de carbodiimide.

7. Procédé selon la revendication 1, dans lequel la résine d'apprêt comprend un groupe fonctionnel amine, la résine thermoplastique comprend un polymère ayant des groupes latéraux acides et l'agent de réticulation est un agent de réticulation à base d'époxy.

8. Procédé selon la revendication 1, dans lequel la composition de réticulation est fournie en une quantité de sorte que le poids de revêtement de l'agent de réticulation déposé sur la composition d'encre imprimée sur le premier substrat souple est d'au moins 0,05 gm⁻².

9. Procédé selon la revendication 1, dans lequel le second substrat souple comprend un film ou une feuille de papier, une feuille métallique et/ou un matériau plastique.

10. Matériau d'emballage souple comprenant :
un premier substrat souple ;
une couche d'encre imprimée comprenant une résine thermoplastique disposée sur le premier substrat souple ;
un agent de réticulation appliqué sur la couche d'encre imprimée de sorte que la résine thermoplastique est réticulée ; et
un second substrat souple stratifié sur le premier substrat souple de sorte que la couche d'encre imprimée et l'agent de réticulation sont disposés entre les premier et second substrats souples, le premier substrat souple comprenant un apprêt sur une surface sur laquelle la composition d'encre imprimée est disposée, l'agent de réticulation appliqué sur la couche d'encre imprimée de sorte que la résine d'apprêt est réticulée.

11. Matériau d'emballage souple selon la revendication 10, dans lequel la résine d'apprêt comprend un groupe fonctionnel amine, la résine thermoplastique comprend un polymère ayant des groupes latéraux acides et l'agent de réticulation est un agent de réticulation à base d'époxy.

12. Matériau d'emballage souple selon la revendication 10, comprenant une couche d'étanchéité disposée sur une surface du second substrat souple autre qu'une surface du second substrat souple sur laquelle le premier substrat souple imprimé avec la composition d'encre est stratifié.

13. Emballage souple comprenant :
un matériau d'emballage souple comprenant :
un premier substrat souple ;
une couche d'encre imprimée comprenant une résine thermoplastique disposée sur le premier substrat souple ;
un agent de réticulation appliqué sur la couche d'encre imprimée de sorte que la résine thermoplastique est réticulée ; et
un second substrat souple stratifié sur le premier substrat souple de sorte que la couche d'encre imprimée et l'agent de réticulation sont disposés entre les premier et second substrats souples, le premier substrat souple comprenant un apprêt sur une surface sur laquelle la composition d'encre imprimée est disposée, l'agent de réticulation étant appliqué sur la couche d'encre imprimée de sorte que la résine d'apprêt est réticulée.
